# EUROPEAN PATENT APPLICATION

(11) **EP 4 848 670 A1**
(43) Date of publication of application: **02.12.2026**
(21) Application number: 24925561.3
(22) Date of filing: 30.10.2024
(51) Int. Cl.: H04L 25/02

(54) **COMMUNICATION METHOD AND COMMUNICATION APPARATUS**

(30) Priority: 23.02.2024 CN 202410205335
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); SONG, Xinghua, Shenzhen, Guangdong 518129 (CN)
(74) Representative: Goddar, Heinz J.
(86) International application number: PCT/CN2024/128321
(87) International publication number: WO 2025/175823

(57) **Abstract**

This application provides a communication method, including: receiving first information indicating a first time-frequency resource for random access, where the first time-frequency resource is a resource for random access in a full duplex time unit, the first time-frequency resource includes at least two time-frequency resource units, and any two of the at least two time-frequency resource units do not overlap with each other in time domain; and if a first condition is met, selecting a first time-frequency resource unit as a time-frequency resource for random access; or if the first condition is not met, selecting a second time-frequency resource unit as a time-frequency resource for random access.

## Description

This application claims priority to Chinese Patent Application No. 202410205335.0, filed with the China National Intellectual Property Administration on February 23, 2024 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

With the rapid development of the 5th generation mobile communication technology, namely, new radio (new radio, NR), various communication requirements have emerged. To meet requirements of emerging services, a full duplex (full duplex, FD) solution is proposed to improve uplink coverage of a time division duplex (time division duplex, TDD) system.

Random access is a step in a process of a terminal device connecting to a network. The terminal device may complete uplink time synchronization with a network device through a random access procedure. For initial access, the terminal device may establish a radio resource control (radio resource control, RRC) connection to the network device through the random access procedure, to implement transmission of uplink and downlink service data. Currently, a terminal device is supported to perform random access (random access, RA) in an FD time unit. However, in a random access procedure in an FD time unit, uplink transmission and downlink transmission interfere with each other, affecting transmission performance. Therefore, how to mitigate interference caused by random access in an FD time unit becomes an urgent problem to be resolved.

### SUMMARY

This application provides a communication method, to mitigate interference caused by random access performed by a terminal device in an FD time unit.

According to a first aspect, a communication method is provided. The method may be performed by a first apparatus, or may be performed by another entity. This is not limited in this application. For ease of description, the following uses an example in which the method is performed by the first apparatus for description. The first apparatus may be a terminal device, or a chip or a circuit (for example, a modem (modem) chip, also referred to as a baseband (baseband) chip, or a system on chip (system on chip, SoC) chip including a modem core or a system in package (system in package, SIP) chip) in a terminal device, or a functional module that can invoke and execute a program in a terminal device.

The communication method includes:
a first apparatus receives first information from a second apparatus, where the first information indicates a first time-frequency resource, the first time-frequency resource is used for random access, the first time-frequency resource includes at least two time-frequency resource units, any two of the at least two time-frequency resource units do not overlap with each other in time domain, the at least two time-frequency resource units include a first time-frequency resource unit and a second time-frequency resource unit, the first time-frequency resource corresponds to a first time domain resource and a first frequency domain resource, the first time domain resource is located in a first time domain unit, a first frequency domain unit corresponding to the first time domain unit includes a first subband for uplink transmission and a second subband for downlink transmission, and the first frequency domain resource is located on the first subband; and
if a first condition is met, the first apparatus selects the first time-frequency resource unit as a time-frequency resource for random access; or
if the first condition is not met, the first apparatus selects the second time-frequency resource unit as a time-frequency resource for random access.

Based on the foregoing technical solution, after receiving the first information, the first apparatus can learn of the first time-frequency resource configured by the second apparatus (for example, a network device) for the first apparatus for random access. In the technical solution, the first time-frequency resource corresponds to the first time domain resource and the first frequency domain resource, the first time domain resource is located in the first time domain unit, the first frequency domain unit corresponding to the first time domain unit includes the first subband for uplink transmission and the second subband for downlink transmission, and the first frequency domain resource is located on the first subband, in other words, the first time-frequency resource is located in an FD time unit. The first time-frequency resource includes multiple time-frequency resource units (or referred to as sub-time-frequency resources, partial time-frequency resources, or the like) that do not overlap with each other in time domain. The first apparatus may select, based on the first condition, one time-frequency resource unit from at least two time-frequency resource units as a time-frequency resource for random access, so that different apparatuses may select, based on the first condition, different time-frequency resource units as time-frequency resources for random access, enabling different apparatuses to use different parts of the first time-frequency resource in a time division manner. Accordingly, a base station may adjust, based on terminal types, terminal states, or interference statues corresponding to different parts of the first time-frequency resource, a scheduling policy for another downlink terminal in a corresponding time period, or learn of a terminal type, a terminal state, or an interference status based on different parts of the first time-frequency resource used by a terminal, to correspondingly adjust a scheduling policy for subsequent communication of the terminal. This can mitigate interference between different apparatuses, to mitigate interference caused by random access of a terminal device in an FD time unit.

With reference to the first aspect, in some implementations of the first aspect, the first condition is that a measurement value is greater than or equal to a first threshold, and the measurement value is obtained by the first apparatus through measurement.

Based on the foregoing technical solution, the first condition may be that a measurement value of a reference signal is greater than or equal to the first threshold, and meeting the first condition includes: The measurement value is greater than or equal to the first threshold. That is, the first apparatus may determine, based on the measurement value obtained by measuring the reference signal and the first threshold, whether the first condition is met, so as to determine a time-frequency resource used for random access.

With reference to the first aspect, in some implementations of the first aspect, the method further includes: The first apparatus receives second information from the second apparatus, where the second information indicates the first threshold.

Based on the foregoing technical solution, the first threshold may be indicated by the second apparatus, that is, the second apparatus may indicate a usage status of the first time-frequency resource, and indicate, by indicating the first threshold, manners in which the first time-frequency resource is used by different apparatuses for random access.

With reference to the first aspect, in some implementations of the first aspect, the first threshold is a reference signal received power threshold, and the measurement value is a received power of the reference signal; the first threshold is a reference signal transmit power threshold, and the measurement value is a transmit power of the reference signal; the first threshold is a reference signal path loss threshold, and the measurement value is a path loss of the reference signal; or the first threshold is a distance threshold between the first apparatus and the second apparatus, and the measurement value is a distance between the first apparatus and the second apparatus.

Based on the foregoing technical solution, the first threshold may be in different forms, and corresponding measurement values may also be in different forms, improving flexibility of the solution.

With reference to the first aspect, in some implementations of the first aspect, the first condition is that a state of the first apparatus is an idle (idle) state or an inactive state, and meeting the first condition includes: The state of the first apparatus is the idle state or the inactive state.

With reference to the first aspect, in some implementations of the first aspect, the first condition is that a state of the first apparatus is a connected state, and meeting the first condition includes: The state of the first apparatus is the connected state.

With reference to the first aspect, in some implementations of the first aspect, the method further includes: The first apparatus obtains a first association relationship, where the first association relationship is an association relationship between the state of the first apparatus and the at least two time-frequency resource units.

Based on the foregoing technical solution, the first condition may be that the state of the first apparatus is the idle state, the inactive state, or the connected state. That is, the first apparatus may determine a time-frequency resource used for random access based on the state of the first apparatus and the association relationship between the state of the first apparatus and the at least two time-frequency resource units.

With reference to the first aspect, in some implementations of the first aspect, the first condition is that a type of the first apparatus is a first type, or the first condition is that a type of the first apparatus is a second type, where the first type includes a terminal with an interference control capability, a terminal with an environment sensing capability, or a terminal with a maximum transmit power class less than or equal to a predetermined threshold. For example, the terminal with an interference control capability may be a terminal capable of using a narrower PRACH transmission beam, for example, a beam width is less than or equal to a given threshold; and the terminal with an environment sensing capability may be a terminal that senses a position of a surrounding terminal and adjusts a signal sending direction to avoid a terminal in close proximity. The second type includes a terminal without an interference control capability, a terminal without an environment sensing capability, or a terminal with a maximum transmit power greater than a predetermined threshold. For example, the terminal without an interference control capability may be a terminal that uses a wide PRACH transmission beam, for example, a beam width is greater than a given threshold. The terminal without an environment sensing capability may be a terminal that cannot sense a position of a surrounding terminal and/or adjust a signal sending direction to avoid a terminal in close proximity.

It should be understood that interference caused by a terminal of the first type is low, and interference caused by a terminal of the second type is high.

With reference to the first aspect, in some implementations of the first aspect, the method further includes: The first apparatus obtains a second association relationship, where the second association relationship is an association relationship between the type of the first apparatus and the at least two time-frequency resource units.

Based on the foregoing technical solution, the first condition may be that the type of the first apparatus is the first type or the second type. That is, the first apparatus may determine a time-frequency resource used for random access based on the type of the first apparatus and the association relationship between the type of the first apparatus and the at least two time-frequency resource units.

With reference to the first aspect, in some implementations of the first aspect, the first time domain resource occupies a first time period in time domain, the first time-frequency resource unit occupies a first sub-time period in time domain, the second time-frequency resource unit occupies a second sub-time period in time domain, a start point of the first sub-time period is a start point of the first time period, an end point of the first sub-time period is a start point of the second sub-time period, and an end point of the second sub-time period is an end point of the first time period.

With reference to the first aspect, in some implementations of the first aspect, the method further includes: The first apparatus receives a system message, where the system message indicates a synchronization signal block (synchronization signal and PBCH block, SSB) index, the SSB index is associated with a first random access occasion set and a second random access occasion set, the first random access occasion set belongs to the first time-frequency resource unit, and the second random access occasion set belongs to the second time-frequency resource unit.

With reference to the first aspect, in some implementations of the first aspect, the first random access occasion set is indicated by a first mask index, and the second random access occasion set is indicated by a second mask index; the first random access occasion set is located in an odd-numbered slot, and the second random access occasion set is located in an even-numbered slot; a start moment of the 1^{st} random access occasion in the first random access occasion set is an odd-numbered orthogonal frequency division multiplexing symbol, and a start moment of the 1^{st} random access occasion in the second random access occasion set is an even-numbered orthogonal frequency division multiplexing symbol; or an index of each random access occasion in the first random access occasion set is an odd number, and an index of each random access occasion in the second random access occasion set is an even number.

With reference to the first aspect, in some implementations of the first aspect, the first time-frequency resource is a physical random access channel (physical random access channel, PRACH) resource, and each of the at least two time-frequency resource units is one random access occasion.

According to a second aspect, a communication method is provided. The method may be performed by a second apparatus, or may be performed by another entity. This is not limited in this application. For ease of description, the following uses an example in which the method is performed by the second apparatus for description. The second apparatus may be a network device, or a chip or a circuit (for example, a modem chip, also referred to as a baseband chip, or a system-on-chip or system-in-package chip including a modem core) in a network device, or a functional module that can invoke and execute a program in a network device.

The communication method includes: A second apparatus determines first information, where the first information indicates a first time-frequency resource, the first time-frequency resource is used for random access, the first time-frequency resource includes at least two time-frequency resource units, any two of the at least two time-frequency resource units do not overlap with each other in time domain, the first time-frequency resource corresponds to a first time domain resource and a first frequency domain resource, the first time domain resource is located in a first time domain unit, a first frequency domain unit corresponding to the first time domain unit includes a first subband for uplink transmission and a second subband for downlink transmission, and the first frequency domain resource is located on the first subband; and the second apparatus sends the first information to a first apparatus.

Based on the foregoing technical solution, the second apparatus (for example, a network device) may configure, for the first apparatus (for example, a terminal device) by using the first information, the first time-frequency resource for random access. In the technical solution, the first time-frequency resource corresponds to the first time domain resource and the first frequency domain resource, the first time domain resource is located in the first time domain unit, the first frequency domain unit corresponding to the first time domain unit includes the first subband for uplink transmission and the second subband for downlink transmission, and the first frequency domain resource is located on the first subband, in other words, the first time-frequency resource is located in an FD time unit. The first time-frequency resource includes multiple time-frequency resource units (or referred to as sub-time-frequency resources, partial time-frequency resources, or the like) that do not overlap with each other in time domain. The first apparatus may select one time-frequency resource unit from at least two time-frequency resource units as a time-frequency resource for random access, so that different apparatuses may select different time-frequency resource units as time-frequency resources for random access, enabling different apparatuses to use different parts of the first time-frequency resource in a time division manner. Accordingly, a base station may adjust, based on terminal types or interference statues corresponding to different parts of the first time-frequency resource, a downlink scheduling policy, or learn of a terminal type or an interference status based on different parts of the first time-frequency resource used by a terminal, to correspondingly adjust a scheduling policy for subsequent communication of the terminal. This can mitigate interference between different apparatuses, to mitigate interference caused by random access of a terminal device in an FD time unit.

With reference to the second aspect, in some implementations of the second aspect, the second apparatus sends second information to the first apparatus, where the second information indicates a first threshold, the first threshold and a measurement value are used by the first apparatus to select one of the at least two time-frequency resource units as a time-frequency resource for random access, and the measurement value is obtained by the first apparatus through measurement.

Based on the foregoing technical solution, the first threshold may be indicated by the second apparatus, that is, the second apparatus may indicate a usage status of the first time-frequency resource, and indicate, by indicating the first threshold, manners in which the first time-frequency resource is used by different apparatuses for random access.

With reference to the second aspect, in some implementations of the second aspect, the first threshold is a reference signal received power threshold, and the measurement value is a received power of the reference signal; the first threshold is a reference signal transmit power threshold, and the measurement value is a transmit power of the reference signal; the first threshold is a reference signal path loss threshold, and the measurement value is a path loss of the reference signal; or the first threshold is a distance threshold between the first apparatus and the second apparatus, and the measurement value is a distance between the first apparatus and the second apparatus.

Based on the foregoing technical solution, the first threshold may be in different forms, and corresponding measurement values may also be in different forms, improving flexibility of the solution.

With reference to the second aspect, in some implementations of the second aspect, the method further includes: The second apparatus sends third information to the first apparatus, where the third information indicates a first association relationship, and the first association relationship is an association relationship between a state of the first apparatus and the at least two time-frequency resource units.

Based on the foregoing technical solution, the second apparatus may indicate, by using the third information, the association relationship between the state of the first apparatus and the at least two time-frequency resource units, so that the first apparatus may determine, based on the state of the first apparatus, a time-frequency resource for random access.

With reference to the second aspect, in some implementations of the second aspect, the at least two time-frequency resource units include a first time-frequency resource unit and a second time-frequency resource unit, the first time domain resource occupies a first time period in time domain, the first time-frequency resource unit occupies a first sub-time period in time domain, and the second time-frequency resource unit occupies a second sub-time period in time domain.

With reference to the second aspect, in some implementations of the second aspect, the second apparatus receives a preamble from the first apparatus in the first time-frequency resource unit; and the second apparatus sends first scheduling information to a third apparatus that transmits a physical downlink shared channel PDSCH in the first sub-time period, where the first scheduling information includes at least one piece of the following information: a transmit power of the PDSCH, a downlink resource for transmitting the PDSCH, a beam for sending the PDSCH, a transmission repetition indication, a modulation and coding scheme MCS, or a precoding scheme. The transmit power of the PDSCH is greater than or equal to a second threshold, a distance between the downlink resource for transmitting the PDSCH and the first time-frequency resource unit is greater than or equal to a third threshold, the transmission repetition indication indicates that the PDSCH is capable of being repeatedly transmitted, and the MCS is less than or equal to a fourth threshold.

With reference to the second aspect, in some implementations of the second aspect, the method further includes: The second apparatus receives a preamble from the first apparatus in the second time-frequency resource unit; and the second apparatus sends second scheduling information to a fourth apparatus that transmits a physical downlink shared channel PDSCH in the second sub-time period, where the second scheduling information includes at least one piece of the following information: a transmit power of the PDSCH, a downlink resource for transmitting the PDSCH, a beam for sending the PDSCH, a transmission repetition indication, or a modulation and coding scheme MCS. The transmit power of the PDSCH is less than a second threshold, a distance between the downlink resource for transmitting the PDSCH and the first time-frequency resource unit is less than a third threshold, the transmission repetition indication indicates that the PDSCH is not capable of being repeatedly transmitted, and the MCS is greater than or equal to a fourth threshold.

Based on the foregoing technical solution, the first apparatus sends preambles on different time domain resources based on the first condition. That is, an apparatus that meets the first condition and an apparatus that does not meet the first condition may use the first time-frequency resource in a time division manner. Prior information may be provided for the second apparatus to estimate and control interference, so that the second apparatus may schedule, in a differentiated manner, users that perform downlink communication in a time domain corresponding to the first time-frequency resource unit. For example, when the second apparatus schedules a downlink user in a time period corresponding to the first time-frequency resource unit or the second time-frequency resource unit in which an edge user (or a user with a high PRACH transmit power) performs random access, scheduling policies used include user selection, resource allocation, power control, MCS adjustment, precoding (downlink beam) sending, and the like. For example, when the first apparatus performs random access in the first time-frequency resource unit, the first apparatus is a terminal causing high interference. Therefore, for a downlink user that uses the first time-frequency resource unit, the second apparatus may allocate a higher PDSCH transmit power, allocate a downlink resource far away from the first time-frequency resource unit, schedule an apparatus far away from the first apparatus, use a beam having a low spatial correlation with an SSB beam corresponding to the first time-frequency resource, use a lower MCS, enable transmission repetition, and the like, to mitigate interference.

By way of example rather than limitation, when the first condition is that the measurement value is greater than or equal to the first threshold, and the first threshold is the received power of the reference signal, if the first apparatus determines that the first condition is met, the first apparatus is a terminal causing low interference; or if the first apparatus determines that the first condition is not met, the first apparatus is a terminal causing high interference.

When the first condition is that the measurement value is greater than or equal to the first threshold, and the first threshold is the transmit power of the reference signal, the path loss, or a distance between a terminal device and a network device, if the first apparatus determines that the first condition is met, the first apparatus is a terminal causing low interference; or if the first apparatus determines that the first condition is not met, the first apparatus is a terminal causing high interference.

When the first condition is that the state of the first apparatus is an idle state or an inactive state, if the first apparatus determines that the first condition is met, the first apparatus is a terminal causing low interference; or if the first apparatus determines that the first condition is not met, the first apparatus is a terminal causing high interference.

When the first condition is that the state of the first apparatus is a connected state, if the first apparatus determines that the first condition is met, the first apparatus is a terminal causing high interference; or if the first apparatus determines that the first condition is not met, the first apparatus is a terminal causing low interference.

When the first condition is that the type of the first apparatus is a first type, if the first apparatus determines that the first condition is met, the first apparatus is a terminal causing low interference; or if the first apparatus determines that the first condition is not met, the first apparatus is a terminal causing high interference.

When the first condition is that the type of the first apparatus is a second type, if the first apparatus determines that the first condition is met, the first apparatus is a terminal causing high interference; or if the first apparatus determines that the first condition is not met, the first apparatus is a terminal causing low interference.

When the first apparatus is a terminal causing high interference, if the first apparatus selects the first time-frequency resource unit or the second time-frequency resource unit for random access, because the first apparatus is a terminal causing high interference, when scheduling a downlink user in the time-frequency resource unit selected by the first apparatus, the second apparatus may allocate a higher PDSCH transmit power to the downlink user, allocate a downlink resource far away from the first time-frequency resource unit, schedule a user far away from the first apparatus, use a beam having a low spatial correlation with an SSB beam corresponding to the first time-frequency resource, use a lower MCS, enable transmission repetition, and the like, to mitigate interference.

When the first apparatus is a terminal causing low interference, if the first apparatus selects the first time-frequency resource unit or the second time-frequency resource unit for random access, because the first apparatus is a terminal causing low interference, when scheduling a downlink user in the time-frequency resource unit selected by the first apparatus, the second apparatus may not consider the interference caused by the first apparatus, or the second apparatus may allocate a low PDSCH transmit power to the downlink user, allocate a downlink resource close to the first time-frequency resource unit, schedule a user close to the first apparatus, use a beam having a high spatial correlation with an SSB beam corresponding to the first time-frequency resource, use a higher MCS, disable transmission repetition, and the like.

For a first apparatus #1 (for example, a device located at a cell edge) being a terminal causing high interference, and a first apparatus #2 (for example, a device located at a cell center) being a terminal causing low interference, it is assumed that the second apparatus configures the first time-frequency resource in the middle of an uplink subband (farthest from a downlink subband below the uplink subband, and/or farthest from a downlink subband above the uplink subband), or the second apparatus configures the first time-frequency resource at the top of an uplink subband (for example, the first frequency domain unit includes one uplink subband and one downlink subband, and the uplink subband is above the downlink subband), or the second apparatus configures the first time-frequency resource on the bottom of an uplink subband (for example, the first frequency domain unit includes one uplink subband and one downlink subband, and the uplink subband is below the downlink subband), the first apparatus #1 selects the first time-frequency resource unit for random access, and the first apparatus #2 selects the second time-frequency resource unit for random access. A random access response (random access response, RAR) scheduled by the second apparatus for the first apparatus #1 is farther away from the first time-frequency resource than an RAR scheduled for the first apparatus #2, and a message 5 (message 5, Msg5) and a message 3 (message 3, Msg3) scheduled by the second apparatus for the first apparatus #1 are closer to the center of the uplink subband than a Msg5 and a Msg3 scheduled for the first apparatus #2.

With reference to the second aspect, in some implementations of the second aspect, the method further includes: The second apparatus sends a system message to the first apparatus, where the system message indicates a synchronization signal block SSB index, the SSB index is associated with a first random access occasion set and a second random access occasion set, the first random access occasion set belongs to the first time-frequency resource unit, and the second random access occasion set belongs to the second time-frequency resource unit.

With reference to the second aspect, in some implementations of the second aspect, the first random access occasion set is indicated by a first mask index, and the second random access occasion set is indicated by a second mask index; the first random access occasion set is located in an odd-numbered slot, and the second random access occasion set is located in an even-numbered slot; a start moment of the 1^{st} random access occasion in the first random access occasion set is an odd-numbered orthogonal frequency division multiplexing symbol, and a start moment of the 1^{st} random access occasion in the second random access occasion set is an even-numbered orthogonal frequency division multiplexing symbol; or an index of each random access occasion in the first random access occasion set is an odd number, and an index of each random access occasion in the second random access occasion set is an even number.

According to a third aspect, a communication method is provided. The method may be performed by a first apparatus, or may be performed by another entity. This is not limited in this application. For ease of description, the following uses an example in which the method is performed by the first apparatus for description. The first apparatus may be a terminal device, or a chip or a circuit (for example, a modem chip, also referred to as a baseband chip, or a system-on-chip or system-in-package chip including a modem core) in a terminal device, or a functional module that can invoke and execute a program in a terminal device.

The communication method includes: receiving fourth information, where the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit includes a frequency domain resource for uplink transmission and a frequency domain resource for downlink transmission, the first frequency domain resource is located in the first frequency domain unit, and the first parameter includes at least one of the following parameters: a format of a first preamble, a first received power, or a first transmit power; and receiving fifth information, where the fifth information indicates a second parameter corresponding to a second time-frequency resource, the second time-frequency resource corresponds to a second time domain resource and a second frequency domain resource, the second time domain resource is located in a second time domain unit, a frequency domain resource included in a second frequency domain unit corresponding to the second time domain unit is used for uplink transmission, the second frequency domain resource is located in the second frequency domain unit, and the second parameter includes at least one of the following parameters: a format of a second preamble, a second received power, or a second transmit power. A length of the format of the first preamble is greater than a length of the format of the second preamble, the first received power is less than the second received power, and the first transmit power is greater than the second transmit power.

Based on the foregoing technical solution, different preamble formats and/or powers are configured for the first time-frequency resource and the second time-frequency resource. For example, a length of a preamble format configured for the first time-frequency resource is greater than a length of a preamble format configured for the second time-frequency resource. For another example, a target received power configured for the first time-frequency resource is less than a target received power configured for the second time-frequency resource, so that the transmit power of the terminal device on the first time-frequency resource is low, causing low interference. In addition, a long preamble format occupies a long time, achieving more power accumulation, to improve random access performance of the terminal device on the first time-frequency resource.

According to a fourth aspect, a communication method is provided. The method may be performed by a second apparatus, or may be performed by another entity. This is not limited in this application. For ease of description, the following uses an example in which the method is performed by the second apparatus for description. The second apparatus may be a network device, or a chip or a circuit (for example, a modem chip, also referred to as a baseband chip, or a system-on-chip or system-in-package chip including a modem core) in a network device, or a functional module that can invoke and execute a program in a network device.

The communication method includes: sending fourth information, where the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit includes a frequency domain resource for uplink transmission and a frequency domain resource for downlink transmission, the first frequency domain resource is located in the first frequency domain unit, and the first parameter includes at least one of the following parameters: a format of a first preamble, a first received power, or a first transmit power; and sending fifth information, where the fifth information indicates a second parameter corresponding to a second time-frequency resource, the second time-frequency resource corresponds to a second time domain resource and a second frequency domain resource, the second time domain resource is located in a second time domain unit, a frequency domain resource included in a second frequency domain unit corresponding to the second time domain unit is used for uplink transmission, the second frequency domain resource is located in the second frequency domain unit, and the second parameter includes at least one of the following parameters: a format of a second preamble, a second received power, or a second transmit power. A length of the format of the first preamble is greater than a length of the format of the second preamble, the first received power is less than the second received power, and the first transmit power is greater than the second transmit power.

For technical effects of the method shown in the fourth aspect and the possible designs of the fourth aspect, refer to the technical effects in the third aspect and the possible designs of the third aspect.

According to a fifth aspect, a communication apparatus is provided. The communication apparatus is configured to perform the first aspect, the third aspect, and any implementation of the first aspect and the third aspect. Specifically, the communication apparatus includes a processor and a memory. The memory is configured to store a computer program. The processor is configured to invoke the computer program from the memory and run the computer program, so that the communication apparatus performs the first aspect, the third aspect, and any implementation of the first aspect and the third aspect.

In an implementation, the communication apparatus is a terminal device, a transceiver unit may be a transceiver or an input/output interface, and a processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device. In this case, a transceiver unit may be an input/output interface, an interface circuit, an output circuit, an input circuit, a pin, a related circuit, or the like on the chip, the chip system, or the circuit; and a processing unit may be at least one processor, processing circuit, logic circuit, or the like.

According to a sixth aspect, a communication apparatus is provided. The communication apparatus is configured to perform the second aspect, the fourth aspect, and any implementation of the second aspect and the fourth aspect. Specifically, the communication apparatus includes a processor and a memory. The memory is configured to store a computer program. The processor is configured to invoke the computer program from the memory and run the computer program, so that the network device performs the second aspect, the fourth aspect, and any implementation of the second aspect and the fourth aspect.

In an implementation, the communication apparatus is a network device, a transceiver unit may be a transceiver or an input/output interface, and a processing unit may be at least one processor. Optionally, the transceiver may be a transceiver circuit. Optionally, the input/output interface may be an input/output circuit.

In another implementation, the communication apparatus may be a chip, a chip system, or a circuit in a network device. In this case, a transceiver unit may be an input/output interface, an interface circuit, an output circuit, an input circuit, a pin, a related circuit, or the like on the chip, the chip system, or the circuit; and a processing unit may be at least one processor, processing circuit, logic circuit, or the like.

According to a seventh aspect, a computer-readable storage medium is provided. The computer-readable storage medium stores a computer program, and when the computer program is run, the method according to any implementation of the first aspect to the fourth aspect is performed.

According to an eighth aspect, a computer program product including instructions is provided. When the computer program product runs, the method according to any implementation of the first aspect to the fourth aspect is performed.

According to a ninth aspect, a chip is provided. The chip includes a processor and a communication interface. The processor reads instructions through the communication interface, to perform the method according to any implementation of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any implementation of the first aspect and the second aspect.

According to a tenth aspect, a communication system is provided, including the communication apparatus in the fifth aspect and the communication apparatus in the sixth aspect.

### BRIEF DESCRIPTION OF DRAWINGS

FIG. 1 is a diagram of a communication system applicable to this application;
FIG. 2 is a diagram of time-frequency division in a TDD solution;
FIG. 3a and FIG. 3b are diagrams of time-frequency division in an SBFD solution;
FIG. 4 is a diagram of time-frequency division in an SFFD solution;
FIG. 5 is a schematic flowchart of a four-step random access procedure;
FIG. 6 is a schematic flowchart of a two-step random access procedure;
FIG. 7 is a diagram of PRACH configuration in a UL slot;
FIG. 8a and FIG. 8b are diagrams of time-frequency resources of PRACHs;
FIG. 9a to FIG. 9c are diagrams of association relationships between an RO and an SSB;
FIG. 10a and FIG. 10b show interference in an SBFD random access procedure;
FIG. 11 is a diagram of inter-terminal device interference in different cases of PRACH transmission;
FIG. 12a and FIG. 12b are diagrams of interference mitigation methods;
FIG. 13 is a schematic flowchart of a communication method according to an embodiment of this application;
FIG. 14 is a diagram of a resource configuration according to an embodiment of this application;
FIG. 15a and FIG. 15b show time division manners of a first time-frequency resource;
FIG. 16 is a diagram of RO selection according to an embodiment of this application;
FIG. 17 is another diagram of RO selection according to an embodiment of this application;
FIG. 18 is a still another diagram of RO selection according to an embodiment of this application;
FIG. 19 is a diagram of scheduling according to an embodiment of this application;
FIG. 20 is another diagram of scheduling according to an embodiment of this application;
FIG. 21 is a schematic flowchart of another communication method according to an embodiment of this application;
FIG. 22 is a diagram of another resource configuration according to an embodiment of this application;
FIG. 23 is a block diagram of a communication apparatus according to an embodiment of this application;
FIG. 24 is a diagram of another communication apparatus according to an embodiment of this application; and
FIG. 25 is a diagram of a chip system according to an embodiment of this application.

### DESCRIPTION OF EMBODIMENTS

For ease of understanding embodiments of this application, the following descriptions are provided first.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in multiple manners. By way of example rather than limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of multiple pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "multiple" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "S310" are merely identifiers for ease of description, and do not limit a sequence of performing steps.

Third, in embodiments of this application, words such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relevant concept in a specific manner.

Fourth, "stored" in embodiments of this application may mean being stored in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a future communication system. This is not limited in this application.

Sixth, in embodiments of this application, "of (of)", "corresponding/relevant (corresponding, relevant)", "corresponding (corresponding)", and "associate (associate)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that expressed meanings are consistent when no difference between the terms is emphasized.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Ninth, "message", "information", "information element (information element, IE)", or the like in this specification may be used interchangeably. A name of a message or information is not limited, provided that a corresponding function can be implemented.

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) and a future communication system, and vehicle-to-another device (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

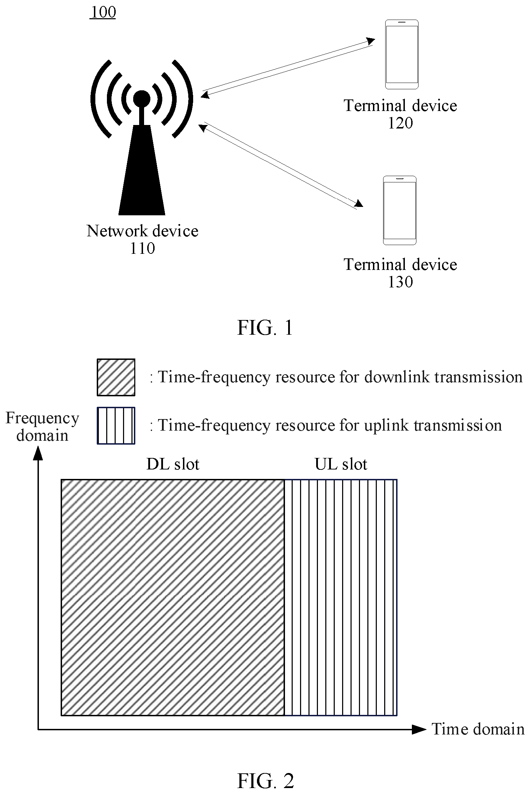

FIG. 1 is a diagram of a communication system applicable to this application. As shown in FIG. 1, the communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120 or the terminal device 130 over a radio link, so as to exchange information. It may be understood that the network device and the terminal device may also be referred to as communication devices or communication apparatuses.

The network device is a network side device having a wireless transceiver function. The network device may be an apparatus in a radio access network (radio access network, RAN) that provides a wireless communication function for the terminal device, and is referred to as a RAN device. The RAN may be a cellular system related to the 3rd generation partnership project (3rd generation partnership project, 3GPP), for example, a 5G mobile communication system, or a future-oriented evolved system. The RAN may alternatively be an open radio access network (open radio access network, O-RAN or ORAN), a cloud radio access network (cloud radio access network, CRAN), or a wireless fidelity (wireless fidelity, Wi-Fi) system. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems employing different radio access technologies (radio access technology, RAT), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central unit, CU), one or more distributed units (distributed unit, DU), or one or more radio units (radio unit, RU). In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU (open DU), the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by multiple network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application. For another example, in a vehicle to everything (vehicle to everything, V2X) technology, the access network device may be a road side unit (road side unit, RSU). Multiple access network devices in the communication system may be base stations of a same type, or may be base stations of different types. The base station may communicate with the terminal device, or may communicate with the terminal device via a relay station. In embodiments of this application, an apparatus configured to implement a function of the network device may be the network device, or may be an apparatus that can support the network device in implementing the function, for example, a chip system or a combined device or component that can implement the function of the access network device. The apparatus may be installed in the network device. In this embodiment of this application, the chip system may include a chip, or may include a chip and another discrete component.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self driving (self driving), telemedicine (remote medical), smart grid (smart grid), smart home, smart office, smart wearables, smart transportation, smart city (smart city), uncrewed aerial vehicles, and robots. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in the IoT system. IoT is an important part in future development of the information technology. A main technical feature of the IoT is to connect things to a network by employing a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology. In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device.

The network device and the terminal device may be deployed on land, including indoor, outdoor, handheld, or vehicle-mounted; may be deployed on water; or may be deployed on an airplane, a balloon, and a satellite in the air. Scenarios in which the network device and the terminal device are located are not limited in embodiments of this application.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF is a control plane network function provided by the operator network. In embodiments of this application, when the communication system 100 includes the AF network element and the SMF network element, the AF may send service-related information to the network device via the SMF.

For ease of understanding embodiments of this application, basic concepts in this application are first described.
1. TDD: In a TDD system, time-domain resources are classified into uplink and downlink resources. For example, a possible uplink/downlink configuration in a TDD system is a DDDSU, where D represents a downlink (downlink) slot, each symbol in the downlink slot is a downlink symbol, U represents an uplink (uplink) slot, each symbol in the uplink slot is an uplink symbol, S is a special (special) slot, and the special slot includes at least a flexible (flexible) symbol.

In a widely used TDD system, a downlink usually occupies most time resources, resulting in poor uplink coverage and a large delay, and failing to meet requirements of emerging services (for example, a VR service or an AR service).

For example, as shown in FIG. 2, a horizontal direction represents time domain, and a vertical direction represents frequency domain. A group of time-frequency resources for downlink (for example, downlink data or downlink control information) transmission and a group of time-frequency resources for uplink (for example, uplink data or uplink control information) transmission are included. A time domain range occupied by the time-frequency resource for downlink transmission is referred to as a downlink slot (DL slot), and a time domain range occupied by the time-frequency resource for uplink transmission is referred to as an uplink slot (UL slot).

2. SBFD: An SBFD solution is proposed to meet requirements of emerging services. In the SBFD solution, a carrier (for example, a component carrier (component carrier, CC)) is divided into multiple subbands that overlap or do not overlap, and transmission directions of different subbands may be different. For example, one carrier includes a first subband and a second subband that do not overlap, and transmission directions of the first subband and the second subband are different.

It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.

In this application, SBFD includes subband overlapping full duplex (subband overlapping full duplex) and subband non-overlapping full duplex (subband non-overlapping full duplex).

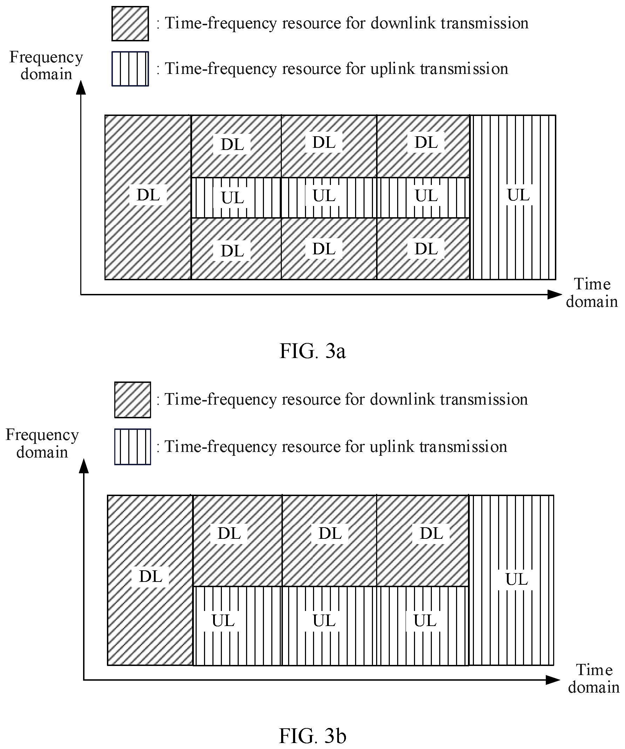

For ease of understanding, the following briefly describes a time-frequency division manner in the SBFD solution with reference to FIG. 3a and FIG. 3b.

As shown in FIG. 3a and FIG. 3b, a horizontal direction represents time domain, a vertical direction represents frequency domain, DL represents a downlink resource for downlink data or control information transmission, UL represents an uplink resource for uplink data or control information transmission, a time period including only a downlink resource is referred to as a downlink slot or a downlink symbol, a time period including only an uplink resource is referred to as an uplink slot or an uplink symbol, and a time period including both a downlink resource and an uplink resource is referred to as an SBFD slot or an SBFD symbol. In this application, an SBFD slot, an SBFD symbol, or a time period including both a downlink resource and an uplink resource may be referred to as an SBFD time unit.

3. SBFD time unit: An SBFD time unit includes an uplink frequency resource and a downlink frequency resource, where the uplink frequency resource is used for uplink transmission, and the downlink frequency resource is used for downlink transmission. It may be understood that the SBFD time unit includes subbands for uplink transmission and downlink transmission, and a base station may perform an SBFD operation using the subbands in the SBFD time unit. In embodiments of this application, when a time unit is a symbol, the SBFD time unit is an SBFD symbol. When a time unit is a slot, a subframe, a half-frame, a frame, a mini-subframe, a mini-slot, or a transmission occasion (transmission occasion, TO), the SBFD time unit may be a time unit including an SBFD symbol.

It should be noted that a frequency domain resource in an SBFD time unit in this application may include a downlink (downlink, DL) subband (subband) and an uplink (uplink, UL) subband. To avoid cross-link interference between downlink transmission on the DL subband and uplink transmission on the UL subband, a guard band (guard band) may be further defined between the DL subband and the UL subband. Whether a guard band exists between the DL subband and the UL subband, and if the guard band exists, whether transmission can be performed in the guard band are not limited in this application. In addition, whether the DL subband and the UL subband can overlap (for example, the DL subband and the UL subband may not overlap at all, or the DL subband and the UL subband may partially overlap, or the DL subband and the UL subband completely overlap) is not limited in this application either.

For example, for SBFD configuration, the following two possible configuration manners are available based on whether a slot includes both an SBFD symbol and a non-SBFD symbol:
(1) The SBFD configuration is at a slot level. To be specific, all symbols included in one slot are configured as SBFD symbols or configured as non-SBFD symbols.
(2) The SBFD configuration is at a symbol level. To be specific, some symbols included in one slot may be configured as SBFD symbols, and the other symbols may be configured as non-SBFD symbols.

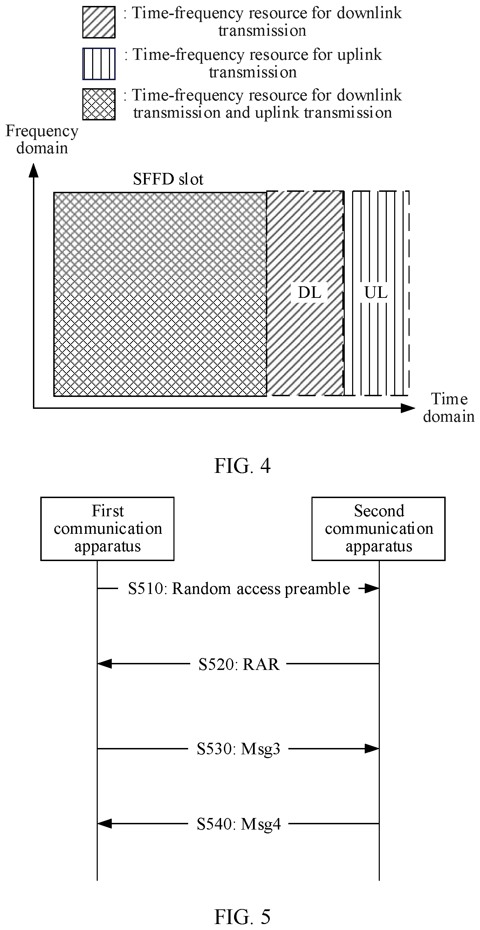

The SBFD symbol may be considered as a symbol configured with SBFD, and the non-SBFD symbol may be considered as a symbol not configured with SBFD. The SBFD configuration is not limited in this application either.
4. Single frequency full duplex (single frequency full duplex, SFFD): The SFFD indicates that an entire CC can be used for simultaneous sending and receiving on a symbol or in a slot. For example, a typical time-frequency division solution of the SFFD solution is shown in FIG. 4. A horizontal direction represents time domain, and a vertical direction represents frequency domain. A group of time-frequency resources for simultaneous downlink and uplink data or control information transmission are included.
5. Subband: A subband is a part of a frequency band in a carrier, namely, one or more contiguous PRBs in frequency domain. In this application, a subband for uplink transmission is referred to as an uplink subband, and a subband for downlink transmission is referred to as a downlink subband. The subband may also be understood as a frequency resource. Currently, a base station supports FD (for example, the foregoing SBFD and SFFD), that is, sending on an uplink subband and receiving on a downlink subband may be performed simultaneously in one slot. A terminal device supports only half-duplex (half duplex, HF) SBFD, that is, in one slot, sending can be performed only in an uplink subband, or receiving can be performed only in a downlink subband.
6. Time-frequency resource: In embodiments of this application, data or information may be carried on a time-frequency resource. The time-frequency resource may include a resource in time domain (namely, a time domain resource) and a resource in frequency domain (namely, a frequency domain resource).

In time domain, a time domain resource may include one or more time domain units (or referred to as time units), and one time unit may include several time domain resources. The time domain unit is, for example, a radio frame (radio frame, RF), and the time domain resource included in the time domain unit is, for example, a subframe (subframe), a frame, a half-subframe or a half-frame, a slot (slot), a mini-slot (mini-slot), a partial slot (partial slot), or an orthogonal frequency division multiplexing OFDM symbol (symbol). Alternatively, the time domain unit may be a set of one or more time domain resources. For example, the time domain unit is one or more OFDM symbols in one slot. For example, the one or more is 6, 7, 12, or 14. The one or more time units may be consecutive or discrete in terms of time. In addition, duration of the slot may be related to a subcarrier spacing (subcarrier spacing, SCS). For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is 15 ∗ 2*^{µ}* kHz, duration of one slot is 2^{-*µ*} ms, where *µ*=0, 1, 2, ..., and *µ* is a non-negative integer.

In frequency domain, a frequency domain resource may include one or more frequency domain units. A frequency domain unit may be a resource element (resource element, RE), a resource block (resource block, RB), a subchannel, a resource pool (resource pool), a bandwidth (bandwidth), a bandwidth part (bandwidth part, BWP), a carrier (carrier, CC), a channel (channel), an interlace (interlace) RB, or the like.

7. Random access (random access, RA): In a communication system, a terminal completes uplink time synchronization with a base station through a random access procedure, and establishes an RRC connection to the base station through the random access procedure. After the RRC connection is established between the terminal and the base station, transmission of uplink and downlink service data may be performed. In addition, generally, before initiating uplink random access, the terminal further needs to detect and receive a downlink synchronization signal sent by the base station to complete downlink time synchronization and frequency synchronization. The downlink synchronization signal generally includes a primary synchronization signal (primary synchronization signal, PSS) and a secondary synchronization signal (secondary synchronization signal, SSS). For example, the PSS and the SSS are carried in a synchronization broadcast block (synchronization signal and PBCH block, SSB).

The random access procedure includes two types: a type-1 (Type-1) random access procedure and a type-2 (Type-2) random access procedure. The type-1 random access procedure is also referred to as a four-step (4-step) random access procedure, and the type-2 random access procedure is also referred to as a two-step (2-step) random access procedure. Based on whether a preamble (preamble) sending conflict exists between terminal devices, the Type-1 RA procedure and/or the Type-2 RA procedure further include a contention-based random access (contention-based random access, CBRA) procedure and a contention-free random access (contention-free random access, CFRA) procedure. The CBRA procedure is basically the same as the CFRA procedure. For ease of description, the following uses the CBRA as an example to describe the Type-1 RA procedure and the Type-2 RA procedure.

FIG. 5 is a schematic flowchart of a four-step random access procedure. The method shown in FIG. 5 may be performed by a first communication apparatus and a second communication apparatus. The first communication apparatus may be a terminal device, or a chip or a circuit in a terminal device, or a functional module that can invoke and execute a program in a terminal device. The second communication apparatus may be a network device, or a chip or a circuit in a network device, or a CU or a DU in a network device, or a functional module that can invoke and execute a program in a network device. As shown in FIG. 5, the method includes the following steps.

S510: A first communication apparatus sends a random access preamble (preamble) to a second communication apparatus.

Correspondingly, the second communication apparatus receives the random access preamble sent by the first communication apparatus.

The first communication apparatus randomly selects, based on a received system message and a selected SSB index, a random access occasion (RACH occasion, RO) associated with the SSB index. The RO may be understood as a time-frequency resource used by the first communication apparatus for random access. The second communication apparatus preconfigures an association relationship between an RO and an SSB index. An RO is used to send a preamble, that is, a message 1 (message 1, Msg1).

After determining the time-frequency resource (or RO), the first communication apparatus selects one preamble sequence for sending on the selected RO. It should be understood that a maximum of 64 preambles can be simultaneously transmitted on one RO, and the first communication apparatus may select one preamble sequence from the 64 preamble sequences for sending. Then, the first communication apparatus sends the preamble sequence to the second communication apparatus, where the preamble sequence is carried on a PRACH.

S520: The second communication apparatus sends a random access response (random access response, RAR) to the first communication apparatus.

Correspondingly, the first communication apparatus receives the RAR from the second communication apparatus.

After receiving the preamble, the second communication apparatus sends random access response (Random access response, RAR) information to the terminal, where the random access response information is a message 2 (message 2, Msg2). The random access response information includes scheduling information for message 3 (message 3, Msg 3)-related allocation, for example, RAR uplink scheduling (UL grant) information.

After sending the Msg1, the first communication apparatus starts a random access response window, and monitors, in the window, the Msg2 sent by the network side. If the first communication apparatus successfully detects the RAR for the first communication apparatus, the random access succeeds, and the first communication apparatus proceeds to send a Msg3 based on an indication of the RAR, where a main function of the Msg3 is to send an RRC connection setup request. If the first communication apparatus does not receive the RAR for the first communication apparatus, the random access fails, and the first communication apparatus re-initiates the random access procedure based on a backoff parameter indicated by the second communication apparatus until a maximum quantity of random access attempts is reached.

S530: The first communication apparatus sends a Msg3 to the second communication apparatus.

Correspondingly, the second communication apparatus receives the Msg3 from the first communication apparatus.

For example, the first communication apparatus sends the Msg3 based on the RAR, where a main function of the Msg3 is to send an RRC connection setup request. The Msg3 is sent on a time-frequency resource specified by the Msg2, and is carried on a PUSCH channel.

S540: The second communication apparatus sends a message 4 (message 4, Msg4) to the first communication apparatus.

Correspondingly, the first communication apparatus receives the Msg4 from the second communication apparatus.

The Msg4 is mainly used for contention resolution. When multiple first communication apparatuses simultaneously perform access, which first communication apparatus is selected for the current random access needs to be determined. Specifically, after sending the Msg3, the first communication apparatus monitors and receives the Msg4 delivered by the second communication apparatus, where the Msg4 carries a contention resolution identity and an air interface parameter configuration for the first communication apparatus. If the first communication apparatus successfully receives the Msg4, the random access succeeds; otherwise, the random access fails. If the random access succeeds, the first communication apparatus proceeds to send a Msg5, where the Msg5 is mainly used to send an RRC setup complete command. If the random access fails, the first communication apparatus re-initiates the random access procedure based on a backoff parameter indicated by the second communication apparatus until a maximum quantity of random access attempts is reached.

It should be noted that FIG. 5 is merely a diagram provided for ease of describing the four-step random access procedure, and does not constitute any limitation on the protection scope of this application. For specific descriptions of the four-step random access procedure, refer to descriptions in a current related technology.

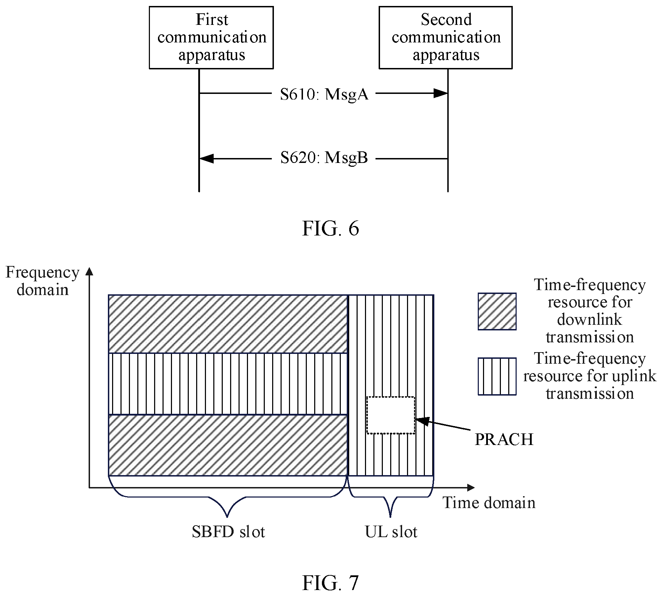

FIG. 6 is a schematic flowchart of a two-step random access procedure. The method shown in FIG. 6 may be performed by a first communication apparatus and a second communication apparatus. The first communication apparatus may be a terminal device, or a chip or a circuit in a terminal device, or a functional module that can invoke and execute a program in a terminal device. The second communication apparatus may be a network device, or a chip or a circuit in a network device, or a CU or a DU in a network device, or a functional module that can invoke and execute a program in a network device. As shown in FIG. 6, the method includes the following steps.

S610: A first communication apparatus sends a message A (message A, MsgA) to a second communication apparatus.

Correspondingly, the second communication apparatus receives the message A from the first communication apparatus.

The MsgA includes a preamble part and a physical uplink shared channel (physical uplink shared channel, PUSCH) part. The preamble part is sent on a PRACH resource (for example, the foregoing RO), and a PUSCH resource may carry L2 or L3 information, for example, a BFR MAC CE or an RRC connection setup request message.

S620: The second communication apparatus sends a message B (message B, MsgB) to the first communication apparatus.

Correspondingly, the first communication apparatus receives the message B from the second communication apparatus.

The MsgB message may include a success RAR (success RAR) or a fallback RAR (fallback RAR).

For example, when the first communication apparatus receives the fallback RAR, the first communication apparatus needs to fall back to a four-step random access procedure, and send a Msg3 to the second communication apparatus, that is, perform step S530 in FIG. 5.

Optionally, in addition to the foregoing process of fallback from the two-step random access to the four-step random access, if the second communication apparatus selects the two-step random access procedure when triggering random access, after the preamble in the two-step random access procedure is sent a maximum quantity of times, the first communication apparatus may also fall back (fallback) to the four-step random access procedure to attempt access, increasing an access success rate of the first communication apparatus and ensuring access performance of the first communication apparatus.
8. Access occasion (RACH occasion, RO): As described above, a UE sends a preamble sequence (preamble) on an RO. One RO may be considered as a time-frequency resource for preamble transmission. One RO may support code division multiplexing transmission of multiple preamble sequences, and one NR cell supports multiple ROs. Different from LTE, a multi-beam operation is introduced in NR. Therefore, a random access procedure in NR is performed based on a beam. For example, for a UE in an initial access phase, transmission is mainly performed based on an SSB beam, and for a UE in a connected state, transmission may also be performed based on a CSI-RS beam. NR can support a base station in sending SSBs in multiple beam directions. For example, in a frequency range 1 (frequency range 1, FR1), a maximum of eight SSBs may be supported. The UE may select one of the SSBs and send a PRACH over the SSB beam. For how the UE selects the SSB for sending the PRACH, for example, if the base station is not configured with an RSRP threshold, the UE may select any SSB to send the PRACH; otherwise, the UE selects any SSB from SSB(s) that exceed the RSRP threshold to send the PRACH.
9. PRACH configuration: A PRACH may be configured in a UL slot by using a RACH configuration generic (RACH-ConfigGeneric) information element, and both legacy and new terminals may perform random access by using the PRACH in the UL slot.

FIG. 7 is a diagram of PRACH configuration in a UL slot. As shown in FIG. 7, a horizontal axis represents time domain, including an SBFD slot and a UL slot, a vertical axis represents frequency domain, and a dashed box in the UL slot may represent a PRACH resource. For example, the UE may perform random access by using the PRACH. For example, the UE looks up tables (for example, Table 6.3.3.2-2 to 6.3.3.2-4 in the existing protocol (for example, TS38211)) according to a parameter prach-ConfigurationIndex carried in RACH-ConfigGeneric to obtain a periodicity, a frame number, a subframe number, a slot number, and a quantity of ROs per slot of the PRACH in time domain, so as to determine a time domain position of the PRACH. For another example, the UE may separately obtain a start position of the PRACH in frequency domain and a quantity of frequency division multiplexed PRACH occasions according to parameters msg1-FrequencyStart and msg1-FDM that are carried in the RACH-ConfigGeneric, so as to determine a frequency domain position of the PRACH.

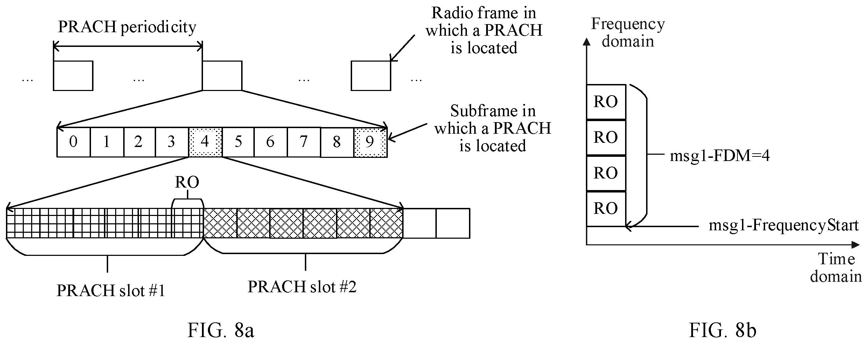

FIG. 8a and FIG. 8b are diagrams of time-frequency resources of PRACHs. As shown in FIG. 8a, three blocks at the top layer of the figure may represent radio frames in which PRACHs are located, a time domain distance between two adjacent blocks is a PRACH periodicity, and the middle layer represents 10 subframes included in a radio frame in which a PRACH is located, for example, subframes 0 to 9, where the subframe 4 and the subframe 9 represent subframes in which PRACHs are located, and the bottom layer represents a slot structure of the subframe 4. The slot structure includes two PRACH slots (for example, a PRACH slot #1 and a PRACH slot #2), and each small block is one RO, that is, each PRACH slot includes six ROs. As shown in FIG. 8b, a horizontal axis represents time domain, a vertical axis represents frequency domain, and each block represents one RO. A quantity of ROs may be 1, 2, 4, or 8. For example, four ROs may be arranged starting from a frequency domain position specified by msg1-FrequencyStart.

10. RO-SSB association: During transmission of the Msg1 in step S510, the UE may select an RO based on an SSB index to transmit the preamble sequence. Therefore, in an NR standard, in addition to specifying a PRACH position, an RO-SSB mapping relationship is further specified (one SSB index may be associated with multiple ROs, or multiple SSB indexes may be associated with one RO). For example, a network device may configure a mapping relationship between N SSBs and one RO by using a higher-layer parameter ssb-perRACH-OccasionAndCB-PreamblesPerSSB. When N is less than 1, one SSB is associated with 1/N ROs. When N is greater than 1, N SSBs are associated with one RO (one SSB is associated with 1/N ROs).

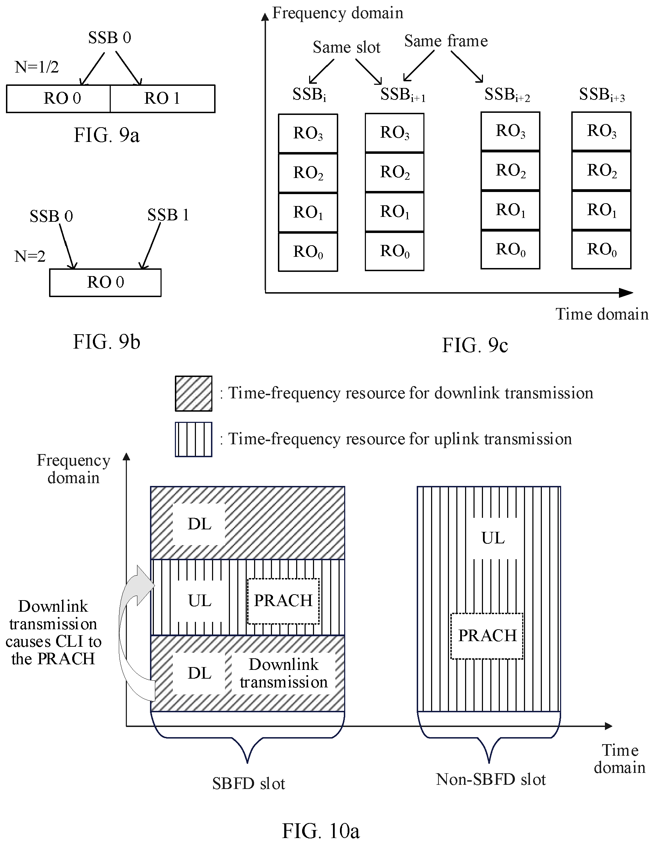

FIG. 9a to FIG. 9c are diagrams of association relationships between an RO and an SSB. As shown in FIG. 9a, when N=1/2, one SSB is associated with two ROs. As shown in FIG. 9b, when N=2, one RO is associated with two SSBs. Therefore, when one SSB index is associated with multiple ROs, the UE may select one of the multiple ROs, and select a preamble sequence transmitted on the RO. Further, after the association relationship between the RO and the SSB is determined, the UE starts RO-SSB mapping in the following order: frequency domain first and then time domain, within the same slot first and then within the same frame, and finally across different frames. As shown in FIG. 9c, a horizontal axis represents time domain, and a vertical axis represents frequency domain. When an SSB set used by a base station may be {SSBᵢ, SSBᵢ₊₁, SSBᵢ₊₂, SSBᵢ₊₃}, msg1-FDM=4, and N=1/4, one SSB is associated with four ROs, the RO set is denoted as {RO₀, RO₁, RO₂, RO₃}, 16 ROs form a complete RO-SSB mapping periodicity, and RO-SSB mapping may start from a frequency domain corresponding to a time domain position of an RO, that is, the RO₀ to RO₃ corresponding to the SSBᵢ occupy four RO positions in frequency domain corresponding to the 1^{st} RO time domain position in the start PRACH slot within the same frame, the RO₀ to RO₃ corresponding to the SSBᵢ₊₁ occupy four RO positions in frequency domain corresponding to the 2^{nd} RO time domain position in the start PRACH slot within the same frame, the RO₀ to RO₃ corresponding to the SSBᵢ₊₂ occupy four RO positions in frequency domain corresponding to the 1^{st} RO time domain position in the 2^{nd} PRACH slot within the same frame, and the RO₀ to RO₃ corresponding to the SSBᵢ₊₃ occupy four RO positions in frequency domain corresponding to the 2^{nd} RO time domain position in the 2^{nd} PRACH slot within the same frame.

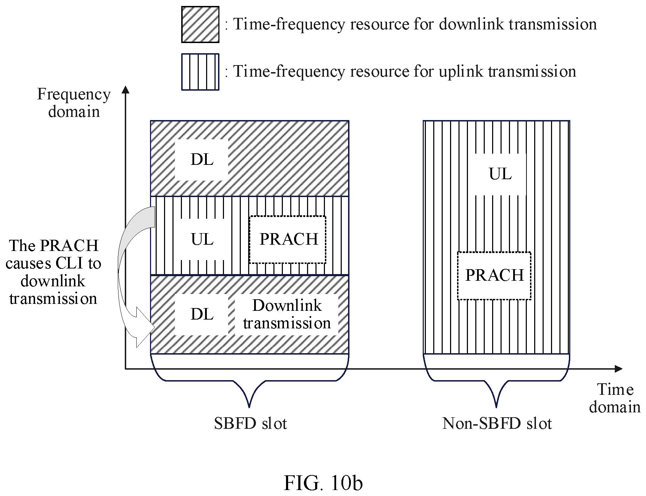

11. Interference in an SBFD random access process: Currently, a random access procedure, including a Msg1 or MsgA sending procedure, on an SBFD symbol/slot is supported. However, supporting Msg1 or MsgA sending on the SBFD symbol/slot may face the following problems:
(1) As shown in FIG. 10a, uplink transmission performed in an uplink subband on an SBFD symbol/slot causes cross-link interference (cross link interference, CLI) to downlink transmission performed in a downlink subband of a local cell or a neighboring cell, that is, UE-UE interference, resulting in poor downlink transmission performance on the SBFD symbol/slot. Especially, for a user in a poor coverage area such as a cell edge, a transmit power is increased to ensure a random access success rate, causing stronger UE-UE interference.
(2) As shown in FIG. 10b, uplink transmission performed in an uplink subband on an SBFD symbol/slot suffers from CLI caused by downlink transmission performed in a downlink subband of a local cell or a neighboring cell, resulting in poor uplink transmission performance on the SBFD symbol/slot. Supporting PRACH transmission on an SBFD symbol/slot may lead to a decreased random access success rate of a UE. Especially for a user in a poor coverage area such as a cell edge, the random access success rate may drop significantly.

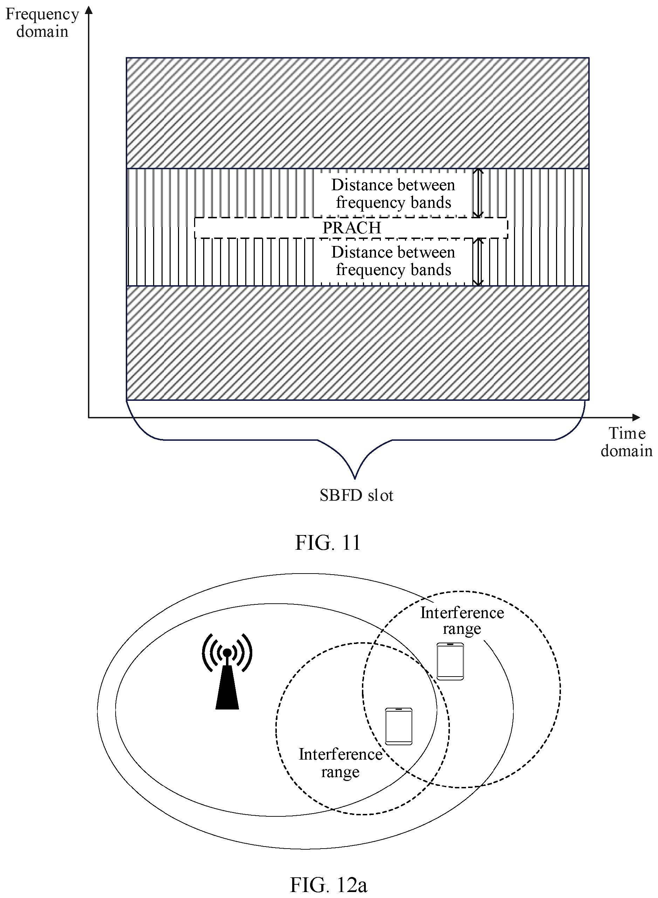

A level of inter-terminal device interference caused by a terminal device varies in different cases. For example, the inter-terminal device interference caused by the terminal device is related to parameters such as a PRACH resource position, a quantity of terminal devices performing access, density of terminal devices, and an application scenario. For ease of understanding, with reference to FIG. 11, brief descriptions are provided about different losses and gains of initial access performed by a terminal device on a PRACH resource in an SBFD slot (which may be referred to as an SBFD-PRACH resource for short below) in different cases. It can be learned from FIG. 11 that when a frequency distance between a PRACH and a downlink resource is greater than a threshold, a level of inter-terminal device interference is low; or when a frequency distance between a PRACH and a downlink resource is less than or equal to a threshold, a level of inter-terminal device interference is high.

With reference to FIG. 1, the foregoing briefly describes scenarios to which the communication method provided in embodiments of this application can be applied, describes basic concepts that may be used in embodiments of this application, and describes inter-terminal device interference in the basic concepts. A method for mitigating inter-terminal device CLI interference during PRACH transmission is: barring a coverage-limited terminal device (for example, a cell edge terminal device transmits a preamble at a higher transmit power) from performing random access on an SBFD-PRACH resource, so as to avoid high CLI interference caused by sending a preamble at a high power by a terminal device whose reference signal RSRP is less than a threshold.

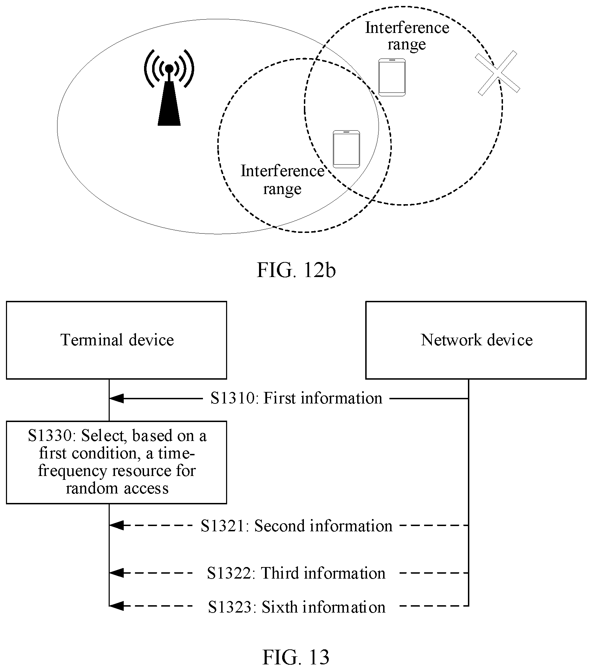

For ease of understanding, the following describes, with reference to FIG. 12a and FIG. 12b, the method for mitigating inter-terminal device CLI interference during PRACH transmission.

As shown in FIG. 12a, a higher transmit power of a cell edge terminal device indicates a higher probability of causing severe CLI interference. As shown in FIG. 12b, a terminal device whose RSRP is less than a threshold causes a high level of inter-terminal device CLI interference, and the terminal device is not allowed to use an SBFD-PRACH resource.

However, the method for mitigating inter-terminal device CLI interference during PRACH transmission faces the following problems:
(1) Because a coverage-limited UE (for example, a UE supporting SBFD) is barred from performing random access on an SBFD-PRACH resource, the coverage-limited UE performs random access by using a PRACH of a UL slot. Consequently, a base station cannot identify different UEs (for example, identify whether a UE supports SBFD) based on whether the UE performs access on an SBFD-PRACH.
(2) In the method for mitigating interference, a coverage-limited UE cannot use an SBFD-PRACH, which may cause a waste of SBFD-PRACH resources, reducing resource utilization efficiency.

To resolve the problem in the foregoing method for mitigating inter-terminal device CLI interference, this application provides a communication method, to improve transmission performance of a terminal device while mitigating inter-terminal device CLI interference.

It should be understood that the communication method provided in embodiments of this application may be applied to a system that performs communication using a multi-antenna technology, for example, the communication system 100 shown in FIG. 1. The communication system may include at least one network device and at least one terminal device.

It should be further understood that a specific structure of an entity for performing the method provided in embodiments of this application is not particularly limited in embodiments described below, provided that the entity can run a program that records code of the method provided in embodiments of this application to perform communication according to the method provided in embodiments of this application. For example, the method provided in embodiments of this application may be performed by a first apparatus. The first apparatus may be a terminal device, or a chip or a circuit (for example, a modem chip, also referred to as a baseband chip, or a system-on-chip or system-in-package chip including a modem core) in a terminal device, or a functional module that can invoke and execute a program in a terminal device. For another example, the method provided in embodiments of this application may be performed by a second apparatus. The second apparatus may be a network device, or a chip or a circuit (for example, a modem chip, also referred to as a baseband chip, or a system-on-chip or system-in-package chip including a modem core) in a network device, or a functional module that can invoke and execute a program in a network device.

For ease of description, the following uses an example in which the first apparatus is a terminal device and the second apparatus is a network device for description.

FIG. 13 is a schematic flowchart of a communication method according to an embodiment of this application. The communication method includes the following steps.

S1310: A network device sends first information to a terminal device. Correspondingly, the terminal device receives the first information from the network device.

Specifically, the first information indicates a first time-frequency resource. The first time-frequency resource is used for random access. The first time-frequency resource corresponds to a first time domain resource and a first frequency domain resource, the first time domain resource is located in a first time domain unit, a first frequency domain unit corresponding to the first time domain unit includes a first subband for uplink transmission and a second subband for downlink transmission, and the first frequency domain resource is located on the first subband. The first subband and the second subband may partially or completely overlap, or may not overlap at all.

In this embodiment, the terminal device being a terminal device that supports SBFD or SFFD is mainly considered. To be specific, the terminal device is a terminal device capable of performing uplink and downlink communication on the first subband for uplink transmission and the second subband for downlink transmission that are included in the first frequency domain unit corresponding to the first time domain unit, or a terminal device capable of performing random access on the first time-frequency resource.

For example, the first time domain unit is an FD time unit, that is, the first frequency domain unit corresponding to the first time domain unit includes an uplink frequency domain resource and a downlink frequency domain resource. For example, the first time domain unit is an SBFD symbol or an SBFD slot. Alternatively, the first time domain unit is an SFFD time unit, that is, in the first time domain unit, an entire carrier includes an uplink frequency domain resource and a downlink frequency domain resource (for example, in the first time domain unit, the entire carrier may be used for simultaneous sending and receiving).

It should be understood that the first time domain unit being an SBFD time unit or an SFFD time unit is merely an example, and does not constitute any limitation on the protection scope of this application. Another time domain unit including an uplink frequency domain resource and a downlink frequency domain resource may also be understood as the first time domain unit in this embodiment.

For example, the first time-frequency resource may be a PRACH resource dedicated to an SBFD time unit or an SFFD time unit. Optionally, the first time-frequency resource may be referred to as an SBFD-PRACH resource. For ease of understanding, the first time-frequency resource may be referred to as an SBFD-PRACH resource below.

By way of example rather than limitation, the first information may further indicate a second time-frequency resource, and the second time-frequency resource is also used for random access. The second time-frequency resource includes a second time domain resource and a second frequency domain resource, the second time domain resource corresponds to the second frequency domain resource, a second part of the second time domain resource is located in a second time domain unit, a second frequency domain unit corresponding to the second time domain unit is used for uplink transmission, and the second frequency domain resource is located in the second frequency domain unit.

For example, the second time domain unit is a UL time unit, that is, the second time domain unit includes an uplink frequency domain resource. For example, the second time domain unit is a UL slot or a UL symbol.

It should be understood that the second time domain unit being a UL time unit is merely an example, and does not constitute any limitation on the protection scope of this application. Another time domain unit including an uplink frequency domain resource may also be understood as the second time domain unit in this embodiment.

For example, the second time-frequency resource may be a PRACH resource dedicated to a non-SBFD slot. Optionally, the second time-frequency resource may be referred to as a UL-PRACH resource.

In this embodiment, a name of the time-frequency resource is not limited, provided that a corresponding function can be implemented. For example, the first time-frequency resource may also be referred to as a resource #1, and the second time-frequency resource may also be referred to as a resource #2.

It should be noted that the first time-frequency resource and/or the second time-frequency resource in this embodiment may be used in a random access procedure of the foregoing four-step random access, may be used in a random access procedure of the foregoing two-step random access, and may be used in CBRA or CFRA.

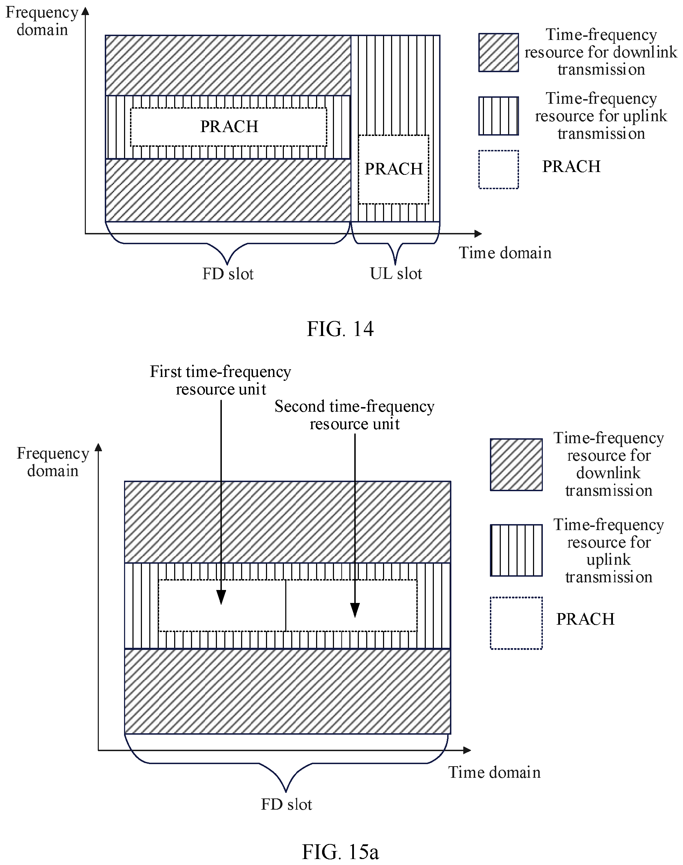

For ease of understanding, with reference to FIG. 14, a status of a resource configured by the network device for the terminal device by using the first information in this embodiment is briefly described.

It can be learned from FIG. 14 that the network device indicates positions of the SBFD-PRACH resource and the UL-PRACH resource for the terminal device. A dashed box in FIG. 14 represents a PRACH resource. The PRACH resource in the SBFD slot is a PRACH resource dedicated to an SBFD slot, that is, the SBFD-PRACH resource. The PRACH resource in the UL slot is a PRACH resource dedicated to a non-SBFD slot, that is, the UL-PRACH resource.

A specific form of the first information is not limited in this embodiment. Any information that can indicate the first time-frequency resource falls within the protection scope of this application. For example, for a format of the first information, reference may be made to descriptions of information indicating parameters such as a PRACH resource position and a usage format in a current related technology. Details are not described herein again.

Specifically, in this embodiment, the first time-frequency resource includes at least two time-frequency resource units, and any two of the at least two time-frequency resource units do not overlap with each other in time domain.

For example, the at least two time-frequency resource units include a first time-frequency resource unit and a second time-frequency resource unit, and the first time-frequency resource unit and the second time-frequency resource unit do not overlap with each other in time domain.

For another example, the at least two time-frequency resource units include a first time-frequency resource unit, a second time-frequency resource unit, and a third time-frequency resource unit, and any two of the first time-frequency resource unit, the second time-frequency resource unit, and the third time-frequency resource unit do not overlap with each other in time domain.

It should be understood that, in this embodiment, a quantity of time-frequency resource units included in the first time-frequency resource is not limited, provided that the quantity is greater than or equal to two. For ease of understanding, an example in which the first time-frequency resource includes the first time-frequency resource unit and the second time-frequency resource unit is used for description. The time-frequency resource unit may be understood as a random access occasion, or the time-frequency resource unit may be understood as a random access occasion set.

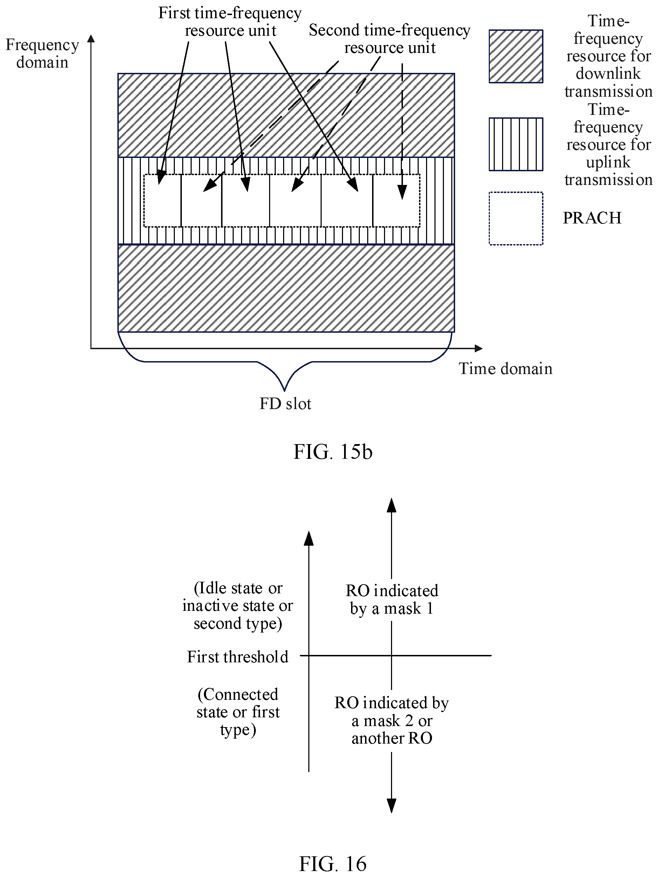

By way of example rather than limitation, the first time-frequency resource includes the first time-frequency resource unit and the second time-frequency resource unit, as shown in FIG. 15a and FIG. 15b.

It can be learned from FIG. 15a that the first time-frequency resource includes the first time-frequency resource element and the second time-frequency resource element that are located at contiguous and adjacent positions. For example, the first time domain resource occupies a first time period in time domain, the first time-frequency resource unit occupies a first sub-time period in time domain, the second time-frequency resource unit occupies a second sub-time period in time domain, a start point of the first sub-time period is a start point of the first time period, an end point of the first sub-time period is a start point of the second sub-time period, and an end point of the second sub-time period is an end point of the first time period.

It can be learned from FIG. 15b that the first time-frequency resource includes the first time-frequency resource unit and the second time-frequency resource unit that are located at discontiguous positions.

It should be understood that FIG. 15a and FIG. 15b are merely examples, and do not constitute any limitation on the protection scope of this application, provided that the first time-frequency resource unit and the second time-frequency resource unit do not overlap with each other in time domain. Examples are not enumerated herein again.

Further, in this embodiment, after receiving the first information, the terminal device may learn of, based on the first information, the first time-frequency resource that can be used for random access. To mitigate inter-terminal device interference, the terminal device may select, based on the first condition, one time-frequency resource unit from the at least two time-frequency resource units included in the first time-frequency resource as a time-frequency resource for random access, to improve transmission performance. The method procedure shown in FIG. 13 further includes the following step.

S1320: The terminal device selects, based on the first condition, a time-frequency resource for random access.

Specifically, in this embodiment, the terminal device may select, based on the first condition, one of the at least two time-frequency resource units as a time-frequency resource for random access.

For example, the at least two time-frequency resource units include the first time-frequency resource unit and the second time-frequency resource unit,

If the first condition is met, the terminal device selects the first time-frequency resource unit as the time-frequency resource for random access; or if the first condition is not met, the terminal device selects the second time-frequency resource unit as the time-frequency resource for random access.

It should be understood that, in this embodiment, a terminal device that meets the first condition and a terminal device that does not meet the first condition may use, in a time division manner, different time-frequency resource units included in the first time-frequency resource, mitigating inter-terminal device interference.

In this embodiment, the first condition includes but is not limited to the following two possible implementations:
In a possible implementation, the first condition is that a measurement value is greater than or equal to a first threshold, and the measurement value is obtained by the terminal device through measurement.

In this implementation, the network device may indicate the first threshold by using second information. To be specific, in addition to configuring the first time-frequency resource by using the first information, the network device may further indicate an SBFD-PRACH resource selection rule by using the second information, to reduce inter-terminal device CLI interference and improve transmission performance. In this implementation, the method procedure shown in FIG. 13 further includes the following step.

S1321: The network device sends second information to the terminal device. Correspondingly, the terminal device receives the second information from the network device.

Specifically, the second information indicates the first threshold, and the first threshold includes at least one of the following thresholds:
a reference signal received power RSRP threshold, a reference signal transmit power threshold, a reference signal path loss threshold, a distance threshold between the terminal device and the network device, or the like, where
if the first threshold is the reference signal received power threshold, the measurement value is a received power of the reference signal;
if the first threshold is the reference signal transmit power threshold, the measurement value is a transmit power of the reference signal;
if the first threshold is the reference signal path loss threshold, the measurement value is a path loss of the reference signal; or
if the first threshold is the distance threshold between the terminal device and the network device, the measurement value is a distance between the terminal device and the network device.

It should be noted that, if the measurement value is the received power of the reference signal, a larger measurement value indicates a smaller path loss, that is, a lower required transmit power, and lower interference caused by the terminal device. On the contrary, a smaller measurement value indicates a larger path loss, that is, a higher required transmit power, and higher interference caused by the terminal device.

In addition, if the measurement value is the transmit power of the reference signal, the path loss, or the distance between the terminal device and the network device, a larger measurement value indicates higher interference caused by the terminal device, and on the contrary, a smaller measurement value indicates lower interference caused by the terminal device. When the measurement value is the path loss, a difference between the transmit power and the received power of the reference signal is correspondingly measured. A larger difference indicates a larger path loss, that is, a higher required transmit power and higher interference.

In other words, the time-frequency resource unit selected by the terminal device based on the first condition is further related to a threshold type. For example, when the first threshold is the reference signal received power threshold, the terminal device determines that the time-frequency resource unit selected based on the first condition is the second time-frequency resource unit, and when the first threshold is the transmit power of the reference signal, the path loss threshold, or the distance between the terminal device and the network device, the terminal device determines that the time-frequency resource unit selected based on the first condition is the first time-frequency resource unit.

Optionally, in this implementation, that the second information indicates the first threshold may be directly indicating a value of the first threshold.

For example, in this implementation, the second information indicates that the first threshold is 10 dBm or dBW, and the threshold type is the reference signal received power or transmit power threshold. For another example, in this implementation, the second information indicates that the first threshold is 10 dB, and the threshold type is the path loss threshold. It should be understood that the specific values of the first threshold indicated by the second information are merely examples, and do not constitute any limitation on the protection scope of this application. For example, a unit of the first threshold is not limited in this embodiment.

Optionally, in this implementation, that the second information indicates the first threshold may be indirectly indicating a value of the first threshold.

For example, in this implementation, the second information indicates an index (index) value of the first threshold, and the terminal device may determine the first threshold based on the index value of the first threshold. For example, preset thresholds are stored in a table, and the second information may indicate an index in the table, so as to indicate a threshold.

It should be understood that the implementations of the second information are merely examples, and do not constitute any limitation on the protection scope of this application. Other information that can indicate the first threshold also falls within the protection scope of this application. In addition, the first threshold may be predefined, requiring no additional indication from the network device.

By way of example rather than limitation, the first information and the second information may be carried in one message, or the first information and the second information may be carried in different messages. For example, the first information and the second information are different fields carried in a system message, or the first information is carried in a system message, and the second information is new signaling other than the system message.

The second information may be sent before the first information, or may be sent after the first information. In this embodiment, a time sequence for sending the first information and the second information is not limited. It should be understood that, in this embodiment, how the network device sends the first information and the second information to the terminal device is not limited.

In addition, the first condition being that the measurement value is greater than or equal to the first threshold is merely an example, and does not constitute any limitation on the protection scope of this application. The first condition is related to a result of comparison between the measurement value and the first threshold. For example, the first condition is that the measurement value is greater than the first threshold. For another example, the first condition is that the measurement value is less than or equal to the first threshold. For another example, the first condition is that the measurement value is less than the first threshold. Examples are not enumerated herein.

Further, in this implementation, after receiving the first information and the second information, the terminal device may determine, based on the first information, the first time-frequency resource available for random access, and determine, from the first time-frequency resource based on the second information, an RO resource position for sending a preamble, to mitigate inter-terminal device interference (for example, CLI). In this case, that the terminal device selects, based on the first condition, a time-frequency resource for random access in step S1320 specifically includes: The terminal device selects, based on the measurement value and the first threshold, one of the at least two time-frequency resource units included in the first time-frequency resource as a time-frequency resource for random access.

Optionally, the first time-frequency resource includes a first time-frequency resource unit and a second time-frequency resource unit, and selecting, by the terminal device based on the measurement value and the first threshold, the first time-frequency resource unit or the second time-frequency resource unit as a time-frequency resource for random access specifically includes:

If the measurement value is greater than or equal to the first threshold, the terminal device selects the first time-frequency resource unit as a time-frequency resource for random access; or if the measurement value is less than the first threshold, the terminal device selects the second time-frequency resource unit as a time-frequency resource for random access.

For example, a terminal device with a smaller measurement value has a larger path loss, needs to use a higher power, and is more likely to cause strong interference, and the first time-frequency resource unit may be used as a time-frequency resource for random access, so that the network device adjusts a PDSCH to mitigate interference. However, a terminal device with a large measurement value is more likely to cause weak interference, and the second time-frequency resource unit may be used as a time-frequency resource for random access (or no constraint is imposed, and a time-frequency resource in the first time-frequency resource is randomly selected as a time-frequency resource for random access).

In another possible implementation, the first condition is that a state of the terminal device is an idle state or an inactive state, or the first condition is that a state of the terminal device is a connected state. The idle state may be understood as an RRC idle state (RRC_IDLE), and the inactive state may be understood as an RRC inactive state (RRC_INACTIVE).

In this implementation, it may be understood that when the state of the terminal device is the idle state or the inactive state, an RO and a preamble used by the terminal device for random access are not controlled by the network device, and high interference is more likely to be caused. When the state of the terminal device is the connected state, an RO and a preamble used by the terminal device for random access are controlled by the network device, and high interference is not likely to be caused. Specifically, the terminal device may select, based on a first association relationship and the state of the terminal device, one of the at least two time-frequency resource units included in the first time-frequency resource as a time-frequency resource for random access, where the first association relationship is an association relationship between the state of the terminal device and the at least two time-frequency resource units.

Optionally, the first association relationship is indicated by the network device. For example, the method procedure shown in FIG. 13 in this implementation further includes the following step.

S1322: The network device sends third information to the terminal device. Correspondingly, the terminal device receives the third information from the network device.

Specifically, the third information indicates the first association relationship. For example, the first time-frequency resource includes a first time-frequency resource unit and a second time-frequency resource unit, the first association relationship is that a terminal device in the idle state or a terminal device in the inactive state is associated with the first time-frequency resource unit, and a terminal device in the connected state is associated with the second time-frequency resource unit.

By way of example rather than limitation, the first information and the third information may be carried in one message, or the first information and the third information may be carried in different messages. For example, the first information and the third information are different fields carried in a system message, or the first information is carried in a system message, and the third information is new signaling other than the system message.

The third information may be sent before the first information, or may be sent after the first information. In this embodiment, a time sequence for sending the first information and the third information is not limited. It should be understood that, in this embodiment, how the network device sends the first information and the third information to the terminal device is not limited.

Optionally, the first association relationship is predefined.

Further, in this implementation, after receiving the first information and obtaining the first association relationship, the terminal device may determine, based on the first information, the first time-frequency resource available for random access, and determine, from the first time-frequency resource based on the first association relationship, an RO resource position for sending a preamble, to mitigate inter-terminal device interference (for example, CLI). In this case, that the terminal device selects, based on the first condition, a time-frequency resource for random access in step S1320 specifically includes: The terminal device selects, based on the first association relationship and the state of the terminal device, one of the at least two time-frequency resource units included in the first time-frequency resource as a time-frequency resource for random access.

Optionally, the first time-frequency resource includes a first time-frequency resource unit and a second time-frequency resource unit, and selecting, by the terminal device based on the first association relationship and the state of the terminal device, the first time-frequency resource unit or the second time-frequency resource unit as a time-frequency resource for random access specifically includes:
If the state of the terminal device is the idle state or the inactive state, the terminal device selects the first time-frequency resource unit as a time-frequency resource for random access; or if the state of the terminal device is the connected state, the terminal device selects the second time-frequency resource unit as a time-frequency resource for random access.

For example, a terminal device in the idle state or the inactive state has a larger path loss, needs to use a higher power, and is more likely to cause strong interference, and the first time-frequency resource unit may be used as a time-frequency resource for random access, so that the network device adjusts a PDSCH to mitigate interference. However, a terminal device in the connected state is more likely to cause weak interference, and the second time-frequency resource unit may be used as a time-frequency resource for random access (or no constraint is imposed, and a time-frequency resource in the first time-frequency resource is randomly selected as a time-frequency resource for random access).

In still another possible implementation, the first condition is that a type of the terminal device is a first type, or the first condition is that a type of the terminal device is a second type. Interference caused by a terminal of the first type is low, and interference caused by a terminal of the second type is high.

By way of example rather than limitation, the first type includes a terminal with an interference control capability, a terminal with an environment sensing capability, or a terminal with a maximum transmit power class less than or equal to a predetermined threshold. For example, the terminal with an interference control capability may be a terminal capable of using a narrower PRACH transmission beam, for example, a beam width is less than or equal to a given threshold; and the terminal with an environment sensing capability may be a terminal that senses a position of a surrounding terminal and adjusts a signal sending direction to avoid a terminal in close proximity. The second type includes a terminal without an interference control capability, a terminal without an environment sensing capability, or a terminal with a maximum transmit power greater than a predetermined threshold. For example, the terminal without an interference control capability may be a terminal that uses a wide PRACH transmission beam, for example, a beam width is greater than a given threshold. The terminal without an environment sensing capability may be a terminal that cannot sense a position of a surrounding terminal and/or adjust a signal sending direction to avoid a terminal in close proximity.

Specifically, the terminal device may select, based on a second association relationship and the state of the terminal device, one of the at least two time-frequency resource units included in the first time-frequency resource as a time-frequency resource for random access, where the second association relationship is an association relationship between the type of the terminal device and the at least two time-frequency resource units.

Optionally, the second association relationship is indicated by the network device. For example, the method procedure shown in FIG. 13 in this implementation further includes the following step.

S1323: The network device sends sixth information to the terminal device. Correspondingly, the terminal device receives the sixth information from the network device.

Specifically, the sixth information indicates the second association relationship. For example, the first time-frequency resource includes a first time-frequency resource unit and a second time-frequency resource unit, the second association relationship is that a terminal device of the first type is associated with the second time-frequency resource unit, and a terminal device of the second type is associated with the first time-frequency resource unit.

By way of example rather than limitation, the first information and the sixth information may be carried in one message, or the first information and the sixth information may be carried in different messages. For example, the first information and the sixth information are different fields carried in a system message, or the first information is carried in a system message, and the sixth information is new signaling other than the system message.

The sixth information may be sent before the first information, or may be sent after the first information. In this embodiment, a time sequence for sending the first information and the sixth information is not limited. It should be understood that, in this embodiment, how the network device sends the first information and the sixth information to the terminal device is not limited.

Optionally, the second association relationship is predefined.

Further, in this implementation, after receiving the first information and obtaining the second association relationship, the terminal device may determine, based on the first information, the first time-frequency resource available for random access, and determine, from the first time-frequency resource based on the second association relationship, an RO resource position for sending a preamble, to mitigate inter-terminal device interference (for example, CLI). In this case, that the terminal device selects, based on the first condition, a time-frequency resource for random access in step S1320 specifically includes: The terminal device selects, based on the second association relationship and the type of the terminal device, one of the at least two time-frequency resource units included in the first time-frequency resource as a time-frequency resource for random access.

Optionally, the first time-frequency resource includes a first time-frequency resource unit and a second time-frequency resource unit, and selecting, by the terminal device based on the second association relationship and the type of the terminal device, the first time-frequency resource unit or the second time-frequency resource unit as a time-frequency resource for random access specifically includes:

If the type of the terminal device is the first type, the terminal device selects the first time-frequency resource unit as a time-frequency resource for random access; or if the type of the terminal device is the second type, the terminal device selects the second time-frequency resource unit as a time-frequency resource for random access.

For example, in this embodiment, the terminal device may select, based on a received system message sent by the network device and a selected SSB index, and based on a result of comparison between the measurement value and the first threshold (or based on the state of the terminal device and the first association relationship, or based on the type of the terminal device and the second association relationship), a time-frequency resource (for example, an RO) that is associated with the SSB index and that is used for random access. In this embodiment, the network device configures an association relationship between an RO and an SSB index.

For example, in this embodiment, the SSB index selected by the terminal device is associated with a first random access occasion set and a second random access occasion set.

A random access occasion included in the first random access occasion set and a random access occasion included in the second random access occasion set are located in a frame. In the communication system, a start frame is the 1^{st} frame, and a number of the 1^{st} frame is 0; or any frame is specified as a start frame, and a number of the start frame is 0. After the start frame is determined, a slot or a symbol on which the random access occasion is located may be determined.

For example, in this embodiment, indexes of different random access occasions are numbered based on a quantity of random access occasions, or are numbered based on a periodicity. Therefore, after a start point of the periodicity or the quantity of random access occasions is determined, the index of the random access occasion may be determined.

Optionally, in this embodiment, the first random access occasion set associated with the SSB index selected by the terminal device belongs to the foregoing first time-frequency resource unit. In this embodiment, the second random access occasion set associated with the SSB index selected by the terminal device belongs to the foregoing second time-frequency resource unit. In other words, in this embodiment, the terminal device may determine a time-frequency resource for random access based on a value relationship between the measurement value and the first threshold (or based on the state of the terminal device and the first association relationship, or based on the type of the terminal device and the second association relationship), and the time-frequency resource for random access is a random access occasion corresponding to the SSB index.

By way of example rather than limitation, in this embodiment, selecting, based on the result of comparison between the measurement value and the first threshold (or based on the state of the terminal device and the first association relationship, or based on the type of the terminal device and the second association relationship), an RO for random access from different random access occasion sets associated with SSB indexes includes but is not limited to the following possible manners:
Manner 1.1: An association relationship between the RO and the result of comparison between the measurement value and the first threshold is indicated in a PRACH mask (mask) manner.

When the first threshold indicated by the second information is the RSRP threshold, the terminal device compares the RSRP measurement value of the SSB or another reference signal with the first threshold, and determines an RO resource position for random access based on a value relationship. As shown in FIG. 16, in the case shown in Manner 1.1, the terminal device compares the measured RSRP of the SSB beam with the first threshold:
if the RSRP measurement value is greater than or equal to the first threshold, an RO is randomly selected from an RO set that is indicated by a mask index 1 and associated with the selected SSB beam; and
if the RSRP measurement value is less than the RSRP measurement value of the first threshold, an RO is randomly selected from an RO set that is indicated by a mask index 2 and associated with the selected SSB beam.

Manner 1.2: An association relationship between the RO and the state of the terminal device is indicated in a PRACH mask (mask) manner.

When the first association relationship is that a terminal device in the idle state or the inactive state is associated with the first time-frequency resource unit, a terminal device in the connected state is associated with the second time-frequency resource unit. As shown in FIG. 16, in the case shown in Manner 1.2, the terminal device selects an RO based on the state of the terminal device:
if the state of the terminal device is the idle state or the inactive state, an RO is randomly selected from an RO set that is indicated by a mask index 1 and associated with the selected SSB beam; and
if the state of the terminal device is the connected state, an RO is randomly selected from an RO set that is indicated by a mask index 2 and associated with the selected SSB beam.

Manner 1.3: An association relationship between the RO and the type of the terminal device is indicated in a PRACH mask (mask) manner.

When the second association relationship is that a terminal device of the first-type is associated with the second time-frequency resource unit, a terminal device of the second-type is associated with the first time-frequency resource unit. As shown in FIG. 16, in the case shown in Manner 1.3, the terminal device selects an RO based on the type of the terminal device:
if the type of the terminal device is the second type, an RO is randomly selected from an RO set that is indicated by a mask index 1 and associated with the selected SSB beam; and
if the type of the terminal device is the first type, an RO is randomly selected from an RO set that is indicated by a mask index 2 and associated with the selected SSB beam.

Manner 2.1: An association relationship between the RO and the result of comparison between the measurement value and the first threshold is indicated in an odd/even-numbered slot or start symbol manner.

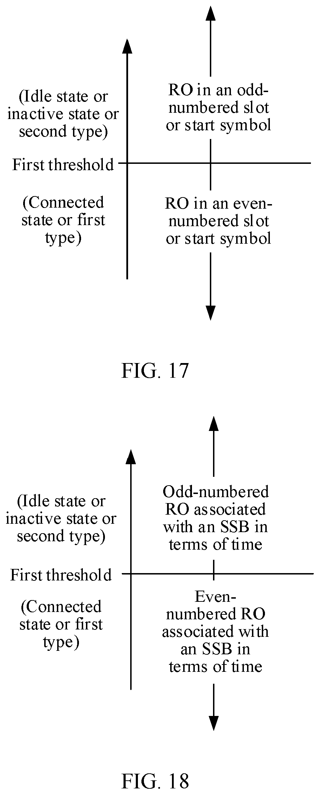

When the first threshold indicated by the second information is the RSRP threshold, the terminal device compares the RSRP measurement value of the SSB or another reference signal with the first threshold, and determines an RO resource position for random access based on a value relationship. As shown in FIG. 17, in the case shown in Manner 2.1, the terminal device compares the measured RSRP of the SSB beam with the first threshold:
if the RSRP measurement value is greater than or equal to the first threshold, an RO is randomly selected from an RO set that is located in an odd-numbered slot and associated with the selected SSB beam; and
if the RSRP measurement value is less than the RSRP measurement value of the first threshold, an RO is randomly selected from an RO set that is located in an even-numbered slot and associated with the selected SSB beam; or
if the RSRP measurement value is greater than or equal to the first threshold, an RO is randomly selected from an RO set that starts with an odd-numbered OFDM symbol and that is associated with the selected SSB beam; and
if the RSRP measurement value is less than the RSRP measurement value of the first threshold, an RO is randomly selected from an RO set that starts with an even-numbered OFDM symbol and that is associated with the selected SSB beam.

Manner 2.2: An association relationship between the RO and the state of the terminal device is indicated in an odd/even-numbered slot or start symbol manner.

When the first association relationship is that a terminal device in the idle state or the inactive state is associated with the first time-frequency resource unit, a terminal device in the connected state is associated with the second time-frequency resource unit. As shown in FIG. 17, in the case shown in Manner 2.2, the terminal device selects an RO based on the state of the terminal device:
if the state of the terminal device is the idle state or the inactive state, an RO is randomly selected from an RO set that is located in an odd-numbered slot and associated with the selected SSB beam; and
if the state of the terminal device is the connected state, an RO is randomly selected from an RO set that is located in an even-numbered slot and associated with the selected SSB beam; or
if the state of the terminal device is the idle state or the inactive state, an RO is randomly selected from an RO set that starts with an odd-numbered OFDM symbol and that is associated with the selected SSB beam; and
if the state of the terminal device is the connected state, an RO is randomly selected from an RO set that starts with an even-numbered OFDM symbol and that is associated with the selected SSB beam.

Manner 2.3: An association relationship between the RO and the type of the terminal device is indicated in an odd/even-numbered slot or start symbol manner.

When the second association relationship is that a terminal device of the first-type is associated with the second time-frequency resource unit, a terminal device of the second-type is associated with the first time-frequency resource unit. As shown in FIG. 17, in the case shown in Manner 2.3, the terminal device selects an RO based on the type of the terminal device:
if the type of the terminal device is the second type, an RO is randomly selected from an RO set that is located in an odd-numbered slot and associated with the selected SSB beam; and
if the type of the terminal device is the first type, an RO is randomly selected from an RO set that is located in an even-numbered slot and associated with the selected SSB beam; or
if the type of the terminal device is the second type, an RO is randomly selected from an RO set that starts with an odd-numbered OFDM symbol and that is associated with the selected SSB beam; and
if the type of the terminal device is the first type, an RO is randomly selected from an RO set that starts with an even-numbered OFDM symbol and that is associated with the selected SSB beam.

Manner 3.1: An association relationship between the RO and the result of comparison between the measurement value and the first threshold is indicated in a TDM-RO index manner. FDM-ROs at a same moment have a same TDM-RO index, which may be numbered in time domain according to a granularity of the RO.

When the first threshold indicated by the second information is the RSRP threshold, the terminal device compares the RSRP measurement value of the SSB or another reference signal with the first threshold, and determines an RO resource position for random access based on a value relationship. As shown in FIG. 18, in the case shown in Manner 3, the terminal device compares the measured RSRP of the SSB beam with the first threshold:
if the RSRP measurement value is greater than or equal to the first threshold, an RO is randomly selected from an RO set whose RO index in terms of time is an odd number and that is associated with the selected SSB beam; and
if the RSRP measurement value is less than the RSRP measurement value of the first threshold, an RO is randomly selected from an RO set whose RO index in terms of time is an even number and that is associated with the selected SSB beam.

Manner 3.2: An association relationship between the RO and the state of the terminal device is indicated in a TDM-RO index manner.

When the first association relationship is that a terminal device in the idle state or the inactive state is associated with the first time-frequency resource unit, a terminal device in the connected state is associated with the second time-frequency resource unit. As shown in FIG. 18, in the case shown in Manner 3.2, the terminal device selects an RO based on the state of the terminal device:
if the state of the terminal device is the idle state or the inactive state, an RO is randomly selected from an RO set whose RO index in terms of time is an odd number and that is associated with the selected SSB beam; and
if the state of the terminal device is the connected state, an RO is randomly selected from an RO set whose RO index in terms of time is an even number and that is associated with the selected SSB beam.

Manner 3.3: An association relationship between the RO and the type of the terminal device is indicated in a TDM-RO index manner.

When the second association relationship is that a terminal device of the first-type is associated with the second time-frequency resource unit, a terminal device of the second-type is associated with the first time-frequency resource unit. As shown in FIG. 18, in the case shown in Manner 3.3, the terminal device selects an RO based on the type of the terminal device:
if the type of the terminal device is the second type, an RO is randomly selected from an RO set whose RO index in terms of time is an odd number and that is associated with the selected SSB beam; and
if the type of the terminal device is the first type, an RO is randomly selected from an RO set whose RO index in terms of time is an even number and that is associated with the selected SSB beam.

It should be noted that the foregoing Manners 1.1 to 3.3 are merely examples, and do not constitute any limitation on the protection scope of this application. Other manners of selecting an RO based on the result of comparison between the measurement value and the first threshold (or based on the state of the terminal device and the first association relationship, or based on the type of the terminal device and the second association relationship) also fall within the protection scope of this application. Examples are not enumerated herein again.

In addition, it should be noted that if the terminal device determines that no RO meeting the requirement of the foregoing solution exists on the first time-frequency resource, the terminal device may not perform initial random access on the first time-frequency resource.

It can be learned from the foregoing descriptions that in this embodiment, the network device may indicate the position of the first time-frequency resource (for example, the SBFD-PRACH resource) to the terminal device by using the first information. Optionally, the first information may be further used to indicate the position of the second time-frequency resource (for example, the foregoing UL-PRACH resource) (as shown in FIG. 14, a dashed box represents a PRACH resource). Then, the network device may indicate the first threshold (for example, the RSRP threshold) by using the second information.

It is predefined that a terminal device whose measurement value is greater than or equal to the first threshold (for example, a terminal device at a center of a serving cell of the network device) uses the first time-frequency resource unit, and a terminal device whose measurement value is less than the threshold (for example, a terminal device at an edge of the serving cell of the network device) uses the second time-frequency resource unit; or
it is predefined that a terminal device in the idle state or the inactive state uses the first time-frequency resource unit, and a terminal device in the connected state uses the second time-frequency resource unit; or
it is predefined that a terminal device of the first type uses the first time-frequency resource unit, and a terminal device of the second type uses the second time-frequency resource unit.

It should be noted that the foregoing descriptions are provided by using only an example in which the first time-frequency resource unit or the second time-frequency resource unit is selected based on the first condition. In this embodiment, the terminal device may further select, based on the first condition, a time-frequency resource unit of more than two time-frequency resource units as a time-frequency resource for random access. For example, the first time-frequency resource includes a time-frequency resource unit #1, a time-frequency resource unit #2, and a time-frequency resource unit #3, and the first threshold includes a first threshold #1 and a first threshold #2. The first condition is a result of comparison between the measurement value and the first threshold #1 and the first threshold #2. A terminal whose measurement value is less than the first threshold #1 selects the time-frequency resource unit #1; a terminal whose measurement value is greater than or equal to the first threshold #1 and less than or equal to the first threshold #2 selects the time-frequency resource unit #2; and a terminal whose measurement value is greater than the first threshold #2 selects the time-frequency resource unit #3. Examples are not enumerated herein again.

It can be learned from the foregoing descriptions that, in this embodiment, terminal devices compare the measurement value with the first threshold, and send preambles on different time domain resources of the first time-frequency resource based on the result of comparison, to implement random access, that is, a terminal device whose measurement value is greater than or equal to the first threshold and a terminal device whose measurement value is less than the first threshold use the first time-frequency resource in a time division manner. Alternatively, terminal devices send preambles on different time domain resources of the first time-frequency resource based on the state of the terminal device, to implement random access, that is, a terminal device in the idle state or the inactive state and a terminal device in the connected state use the first time-frequency resource in a time division manner. Alternatively, terminal devices send preambles on different time domain resources of the first time-frequency resource based on the type of the terminal device, to implement random access, that is, a terminal device of the first type and a terminal device of the second type use the first time-frequency resource in a time division manner, so that prior information can be provided for the network device to estimate and control interference, enabling the network device to perform scheduling based on the prior information, and mitigating inter-terminal device interference.

For example, the network device schedules a user and controls downlink transmission on a downlink (downlink, DL) resource corresponding to the first time-frequency resource unit and the second time-frequency resource unit.

For example, for a PDSCH user in a time period in which a user causing high interference (for example, a user using the first time-frequency resource unit) uses a PRACH, the network device may allocate a higher PDSCH transmit power to the PDSCH user, allocate a DL resource far away from the PRACH, schedule a user using a beam with high isolation from the current SSB beam, schedule a user far away from the current user, use a lower MCS, enable transmission repetition, and the like, to mitigate interference. The user causing high interference may be any one of the following users:
when the first condition is that the measurement value is greater than or equal to the first threshold, and the first threshold is the received power of the reference signal, the user causing high interference may be a user that is determined not to meet the first condition;
when the first condition is that the measurement value is greater than or equal to the first threshold, and the first threshold is the transmit power of the reference signal, the path loss, or the distance between the terminal device and the network device, the user causing high interference may be a user that is determined to meet the first condition;
when the first condition is that the state of the terminal is the idle state or the inactive state, the user causing high interference may be a user that is determined to meet the first condition;
when the first condition is that the state of the terminal is the connected state, the user causing high interference may be a user that is determined not to meet the first condition; or
when the first condition is that the type of the terminal is the first type, the user causing high interference may be a user that is determined not to meet the first condition; or when the first condition is that the type of the terminal is the second type, the user causing high interference may be a user that is determined to meet the first condition.

For example, the first time-frequency resource includes a first time-frequency resource unit and a second time-frequency resource unit, the first time domain resource occupies a first time period in time domain, the first time-frequency resource unit occupies a first sub-time period in time domain, and the second time-frequency resource unit occupies a second sub-time period in time domain.

If the network device receives a preamble from the terminal device in the first time-frequency resource unit, the network device may send first scheduling information to a third apparatus that transmits a physical downlink shared channel PDSCH in the first sub-time period, where the first scheduling information includes at least one piece of the following information: a transmit power of the PDSCH, a downlink resource for transmitting the PDSCH, a beam for sending the PDSCH, a transmission repetition indication, a modulation and coding scheme MCS, or a precoding scheme. The transmit power of the PDSCH is greater than or equal to a second threshold, a distance between the downlink resource for transmitting the PDSCH and the first time-frequency resource unit is greater than or equal to a third threshold, the transmission repetition indication indicates that the PDSCH is capable of being repeatedly transmitted, and the MCS is less than or equal to a fourth threshold.

If the network device receives a preamble from the terminal device in the second time-frequency resource unit, the network device may send second scheduling information to a fourth apparatus that transmits a physical downlink shared channel PDSCH in the second sub-time period, where the second scheduling information includes at least one piece of the following information: a transmit power of the PDSCH, a downlink resource for transmitting the PDSCH, a beam for sending the PDSCH, a transmission repetition indication, or a modulation and coding scheme MCS. The transmit power of the PDSCH is less than a second threshold, a distance between the downlink resource for transmitting the PDSCH and the first time-frequency resource unit is less than a third threshold, the transmission repetition indication indicates that the PDSCH is not capable of being repeatedly transmitted, and the MCS is greater than or equal to a fourth threshold.

The second threshold, the third threshold, the fourth threshold, or the like may be predefined, or may be determined by the network device and the terminal device through negotiation. This is not limited in this embodiment.

Further, the network device allocates, to critical channels such as a PRACH and a PUCCH, a resource whose SBFD uplink subband is far away from the downlink subband, and allocates, to less critical channels such as a PUSCH, a resource whose SBFD uplink subband is close to the downlink subband. For example, the frequency division multiplexed RO occupying the lowest frequency position in frequency division multiplexed ROs of the SBFD-PRACH starts from the lowest RE or the lowest RB of the SBFD uplink subband, or the frequency division multiplexed RO occupying the highest frequency position in frequency division multiplexed ROs of the SBFD-PRACH ends at the highest RE or the highest RB of the uplink subband, or the center frequency position of the PRACH is aligned with the center frequency position of the uplink subband (with a deviation not exceeding a given threshold, where a specific quantity may be predefined), or the PRACH does not occupy one or more RBs or REs (a specific quantity may be predefined) closest to the downlink subband.

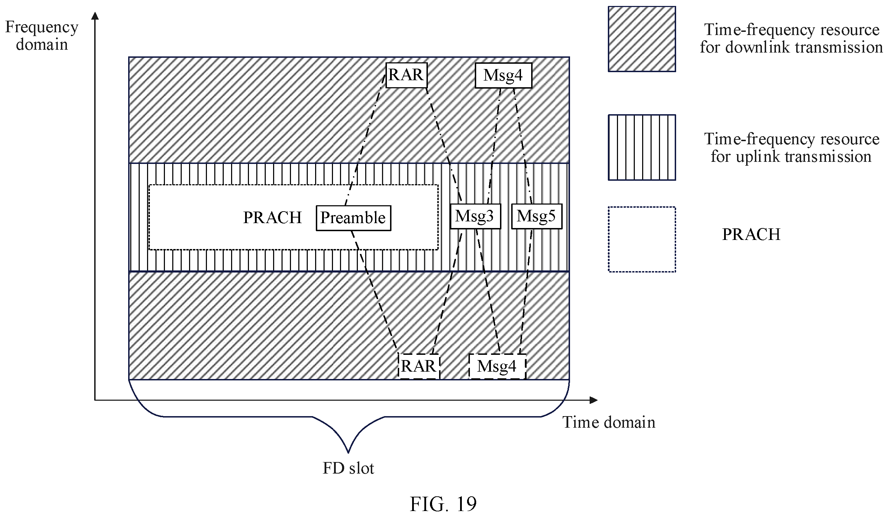

As shown in FIG. 19, the network device configures an SBFD-PRACH resource at a center of a UL subband (the farthest away from downlink subbands), and a terminal device that sends a preamble on the second time-frequency resource unit may be a cell edge terminal device with a high transmit power. An RAR scheduled by the network device for the terminal device is at the bottom of the lower DL subband or the top of the upper DL subband, a Msg5 and a Msg3 are at the center of the UL subband, and a Msg4 is at the bottom of the lower DL subband or the top of the upper DL subband. In other words, a terminal device that sends a preamble on the second time-frequency resource unit may be a cell edge terminal device with a high transmit power. An RAR scheduled by the network device for the terminal device is farther away from the SBFD-PRACH resource than an RAR scheduled by the network device for a terminal device that sends a preamble on the first time-frequency resource unit (for example, a device at the cell center), and a Msg5 and a Msg3 scheduled by the network device for the terminal device is closer to the center of the UL subband than a Msg5 and a Msg3 of a terminal device that sends a preamble on the first time-frequency resource unit (for example, a device at the cell center).

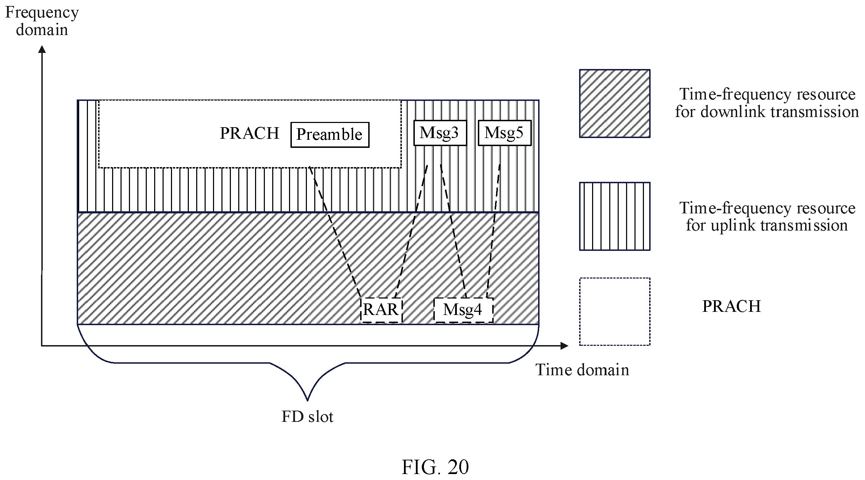

As shown in FIG. 20, the network device configures an SBFD-PRACH resource at the top of a UL subband (the farthest away from a downlink subband), and a terminal device that sends a preamble on the second time-frequency resource unit may be a cell edge terminal device with a high transmit power. An RAR scheduled by the network device for the terminal device is at the bottom of the lower DL subband, a Msg5 and a Msg3 are at the center of the UL subband, and a Msg4 is at the bottom of the lower DL subband. In other words, a terminal device that sends a preamble on the second time-frequency resource unit may be a cell edge terminal device with a high transmit power. An RAR scheduled by the network device for the terminal device is farther away from the SBFD-PRACH resource than an RAR scheduled by the network device for a terminal device that sends a preamble on the first time-frequency resource unit (for example, a device at the cell center), and a Msg5 and a Msg3 scheduled by the network device for the terminal device is closer to the center of the UL subband than a Msg5 and a Msg3 of a terminal device that sends a preamble on the first time-frequency resource unit (for example, a device at the cell center).

In the communication method shown in FIG. 13, new signaling is added for the base station to indicate a usage status of the SBFD-PRACH, that is, a condition under which the SBFD-PRACH is used for random access, for example, which ROs can be used by which UEs, and an average UE-UE interference level caused by random access in a cell is controlled, achieving a trade-off between UE access capability enhancement and interference control.

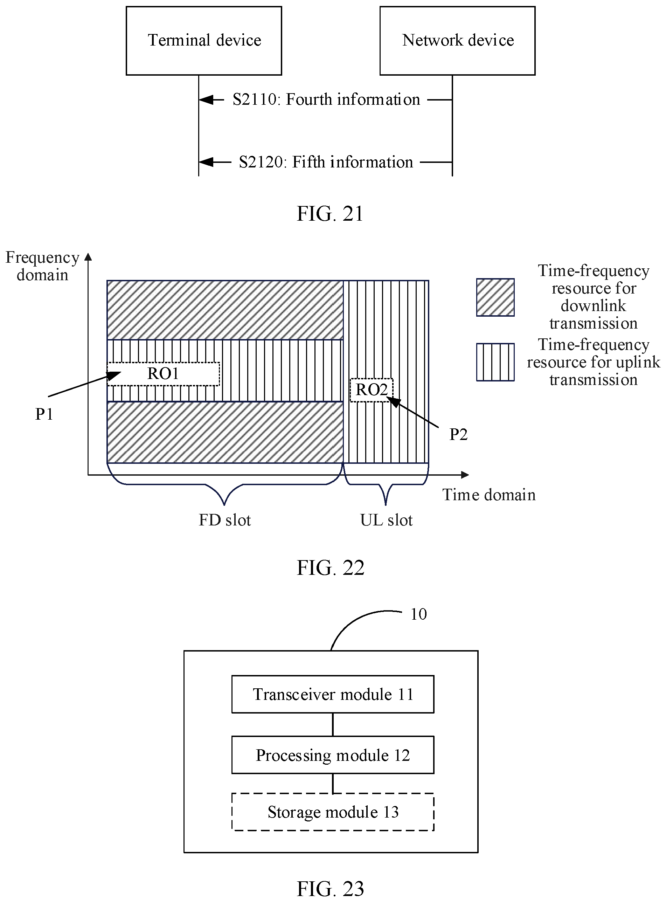

This application further provides another communication method, to mitigate UE-UE interference by configuring a preamble format with a longer length and configuring a lower transmit power for an SBFD-PRACH resource. For ease of understanding, the following describes the communication method in detail with reference to FIG. 21.

FIG. 21 is a schematic flowchart of another communication method according to an embodiment of this application. The communication method includes the following steps.

S2110: A network device sends fourth information to a terminal device. Correspondingly, the terminal device receives the fourth information from the network device.

Specifically, the fourth information is used to configure a first parameter corresponding to a first time-frequency resource, and the first parameter includes at least one of the following parameters:
a format of a first preamble, a first received power, or a first transmit power. For related descriptions of the first time-frequency resource, refer to the descriptions of the first time-frequency resource in the communication method shown in FIG. 13. Details are not described herein again.

S2120: The network device sends fifth information to the terminal device. Correspondingly, the terminal device receives the fifth information from the network device.

Specifically, the fifth information is used to configure a second parameter corresponding to a second time-frequency resource, and the second parameter includes at least one of the following parameters:
a format of a second preamble, a second received power, or a second transmit power. For related descriptions of the second time-frequency resource, refer to the descriptions of the second time-frequency resource in the communication method shown in FIG. 13. Details are not described herein again.

In this embodiment, the fourth information and the fifth information are independently configured. For example, the fourth information and the fifth information may be separately carried by using different signaling. For another example, the fourth information and the fifth information are carried (or indicated) by using different fields.

For example, in this embodiment, the fourth information and the fifth information may be the following information:

For example, the fourth information includes a first prach-ConfigurationIndex field that is used to configure the format of the first preamble corresponding to the first time-frequency resource, and the fifth information includes a second prach-ConfigurationIndex field that is used to configure the format of the second preamble corresponding to the second time-frequency resource.

The first prach-ConfigurationIndex field and the second prach-ConfigurationIndex field may be located in a same information element, for example, both located in RACH-ConfigGeneric, or the first prach-ConfigurationIndex field and the second prach-ConfigurationIndex field may be located in different information elements.

Optionally, the fourth channel further includes a first preambleReceivedTargetPower field that is used to configure the first received power corresponding to the first time-frequency resource, and the fifth channel further includes a second preambleReceivedTargetPower field that is used to configure the second received power corresponding to the second time-frequency resource.

The first preambleReceivedTargetPower field and the second preambleReceivedTargetPower field may be located in a same information element, for example, both located in RACH-ConfigGeneric, or the first preambleReceivedTargetPower field and the second preambleReceivedTargetPower field may be located in different information elements.

For ease of understanding, with reference to FIG. 22, a status of resources configured by the network device for the terminal device by using the fourth information and the fifth information in this embodiment is briefly described.

It can be learned from FIG. 22 that a length of a preamble format configured by the base station for the SBFD-PRACH is greater than a length of a preamble format configured for the UL-PRACH, and a target received power P0 configured for the SBFD-PRACH is less than a target received power configured for the UL-PRACH.

In the communication method shown in FIG. 21, a transmit power of the UE on the SBFD-PRACH is low, causing low UE-UE interference. At the same time, a long preamble occupies a long time, achieving more power accumulation. This achieves an objective of mitigating interference while ensuring uncompromised RACH access performance.

It should be understood that sequence numbers of the foregoing processes do not mean an execution order. The execution order of the processes should be determined based on functions and internal logic of the processes, and should not be construed as any limitation on the implementation processes of this embodiment of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that, in the foregoing method embodiments, the method and operations implemented by a device (for example, the network device or the terminal device) may alternatively be implemented by a component (for example, a chip or a circuit) of the device.

The foregoing describes in detail communication methods provided in embodiments of this application with reference to FIG. 13 and FIG. 21. The foregoing communication methods are mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

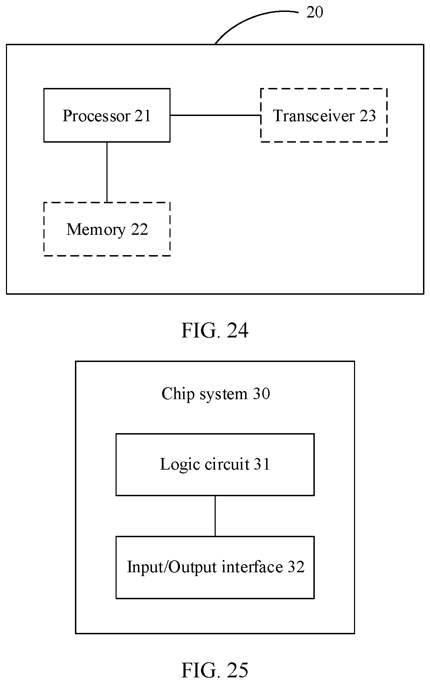

The following describes in detail communication apparatuses provided in this application with reference to FIG. 23 and FIG. 25. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. The following provides descriptions by using an example in which the functional modules are divided based on the functions.

FIG. 23 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform sending and receiving related operations of the terminal device in the foregoing method embodiments, and the processing module 12 may be configured to perform a processing related operation of the terminal device in the foregoing method embodiments.

In a possible implementation, the transceiver module 11 is configured to receive first information, where the first information indicates a first time-frequency resource, the first time-frequency resource is used for random access, the first time-frequency resource includes at least two time-frequency resource units, any two of the at least two time-frequency resource units do not overlap with each other in time domain, the first time-frequency resource corresponds to a first time domain resource and a first frequency domain resource, the first time domain resource is located in a first time domain unit, a first frequency domain unit corresponding to the first time domain unit includes a first subband for uplink transmission and a second subband for downlink transmission, and the first frequency domain resource is located on the first subband. The processing module 12 is configured to select, based on a first condition, one of the at least two time-frequency resource units as a time-frequency resource for random access.

In another possible implementation, the transceiver module 11 is configured to receive fourth information, where the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit includes a frequency domain resource for uplink transmission and a frequency domain resource for downlink transmission, the first frequency domain resource is located in the first frequency domain unit, and the first parameter includes at least one of the following parameters: a format of a first preamble, a first received power, or a first transmit power. The transceiver module 11 is further configured to receive fifth information, where the fifth information indicates a second parameter corresponding to a second time-frequency resource, the second time-frequency resource corresponds to a second time domain resource and a second frequency domain resource, the second time domain resource is located in a second time domain unit, a frequency domain resource included in a second frequency domain unit corresponding to the second time domain unit is used for uplink transmission, the second frequency domain resource is located in the second frequency domain unit, and the second parameter includes at least one of the following parameters: a format of a second preamble, a second received power, or a second transmit power. A length of the format of the first preamble is greater than a length of the format of the second preamble, the first received power is less than the second received power, and the first transmit power is greater than the second transmit power.

When the apparatus 10 is configured to perform the method in FIG. 13, the transceiver module 11 may be configured to perform steps of receiving and sending information in the method, for example, steps S1310, S1321, S1322, and S1323; and the processing module 12 may be configured to perform a processing step in the method, for example, step S1320.

When the apparatus 10 is configured to perform the method in FIG. 21, the transceiver module 11 may be configured to perform steps of receiving and sending information in the method, for example, steps S2110 and S2120; and the processing module 12 may be configured to perform a processing step in the method.

It should be understood that a specific process in which the units perform the foregoing corresponding steps is described in detail in the foregoing method embodiments, and for brevity, details are not described herein.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform sending and receiving related operations of the network device in the foregoing method embodiments, and the processing module 12 may be configured to perform a processing related operation of the network device in the foregoing method embodiments.

In a possible implementation, the processing module 12 is configured to determine first information, where the first information indicates a first time-frequency resource, the first time-frequency resource is used for random access, the first time-frequency resource includes at least two time-frequency resource units, any two of the at least two time-frequency resource units do not overlap with each other in time domain, the first time-frequency resource corresponds to a first time domain resource and a first frequency domain resource, the first time domain resource is located in a first time domain unit, a first frequency domain unit corresponding to the first time domain unit includes a first subband for uplink transmission and a second subband for downlink transmission, and the first frequency domain resource is located on the first subband. The transceiver module 11 is configured to send the first information to a first apparatus.

In another possible implementation, the transceiver module 11 is configured to send fourth information, where the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit includes a frequency domain resource for uplink transmission and a frequency domain resource for downlink transmission, the first frequency domain resource is located in the first frequency domain unit, and the first parameter includes at least one of the following parameters: a format of a first preamble, a first received power, or a first transmit power. The transceiver module 11 is further configured to send fifth information, where the fifth information indicates a second parameter corresponding to a second time-frequency resource, the second time-frequency resource corresponds to a second time domain resource and a second frequency domain resource, the second time domain resource is located in a second time domain unit, a frequency domain resource included in a second frequency domain unit corresponding to the second time domain unit is used for uplink transmission, the second frequency domain resource is located in the second frequency domain unit, and the second parameter includes at least one of the following parameters: a format of a second preamble, a second received power, or a second transmit power. A length of the format of the first preamble is greater than a length of the format of the second preamble, the first received power is less than the second received power, and the first transmit power is greater than the second transmit power.

When the apparatus 10 is configured to perform the method in FIG. 13, the transceiver module 11 may be configured to perform steps of receiving and sending information in the method, for example, steps S1310, S1321, S1322, and S1323; and the processing module 12 may be configured to perform a processing step in the method.

When the apparatus 10 is configured to perform the method in FIG. 21, the transceiver module 11 may be configured to perform steps of receiving and sending information in the method, for example, steps S2110 and S2120; and the processing module 12 may be configured to perform a processing step in the method.

It should be understood that a specific process in which the units perform the foregoing corresponding steps is described in detail in the foregoing method embodiments, and details are not described herein.

It should be further understood that the apparatus 10 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing method. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 24 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 24, the apparatus 20 further includes a memory 22, and the memory 22 is configured to store a computer program or instructions and/or data. The memory 22 and the processor 21 may be integrated together, or may be disposed separately. Optionally, there are one or more memories 22.

Optionally, as shown in FIG. 24, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes multiple forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 25 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement a processing related operation performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is caused to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first apparatus, first information from a second apparatus, wherein the first information indicates a first time-frequency resource, the first time-frequency resource is used for random access, the first time-frequency resource comprises at least two time-frequency resource units, any two of the at least two time-frequency resource units do not overlap with each other in time domain, the at least two time-frequency resource units comprise a first time-frequency resource unit and a second time-frequency resource unit, the first time-frequency resource corresponds to a first time domain resource and a first frequency domain resource, the first time domain resource is located in a first time domain unit, a first frequency domain unit corresponding to the first time domain unit comprises a first subband for uplink transmission and a second subband for downlink transmission, and the first frequency domain resource is located on the first subband; and
if a first condition is met, selecting, by the first apparatus, the first time-frequency resource unit as a time-frequency resource for random access; or
if the first condition is not met, selecting, by the first apparatus, the second time-frequency resource unit as a time-frequency resource for random access.

2. The method according to claim 1, wherein
the first condition is that a measurement value is greater than or equal to a first threshold, and the measurement value is obtained by the first apparatus through measurement.

3. The method according to claim 2, wherein the method further comprises:
receiving, by the first apparatus, second information from the second apparatus, wherein the second information indicates the first threshold.

4. The method according to claim 2 or 3, wherein
the first threshold is a reference signal received power threshold, and the measurement value is a received power of the reference signal;
the first threshold is a reference signal transmit power threshold, and the measurement value is a transmit power of the reference signal;
the first threshold is a reference signal path loss threshold, and the measurement value is a path loss of the reference signal; or
the first threshold is a distance threshold between the first apparatus and the second apparatus, and the measurement value is a distance between the first apparatus and the second apparatus.

5. The method according to claim 1, wherein
the first condition is that a state of the first apparatus is an idle state or an inactive state; or
the first condition is that a state of the first apparatus is a connected state.

6. The method according to claim 5, wherein the method further comprises:
obtaining, by the first apparatus, a first association relationship, wherein the first association relationship is an association relationship between the state of the first apparatus and the at least two time-frequency resource units.

7. The method according to claim 1, wherein the first time domain resource occupies a first time period in time domain, the first time-frequency resource unit occupies a first sub-time period in time domain, the second time-frequency resource unit occupies a second sub-time period in time domain, a start point of the first sub-time period is a start point of the first time period, an end point of the first sub-time period is a start point of the second sub-time period, and an end point of the second sub-time period is an end point of the first time period.

8. The method according to claim 1 or 7, wherein the method further comprises:
receiving, by the first apparatus, a system message from the second apparatus, wherein the system message indicates a synchronization signal block SSB index, the SSB index is associated with a first random access occasion set and a second random access occasion set, the first random access occasion set belongs to the first time-frequency resource unit, and the second random access occasion set belongs to the second time-frequency resource unit.

9. The method according to claim 8, wherein
the first random access occasion set is indicated by a first mask index, and the second random access occasion set is indicated by a second mask index;
the first random access occasion set is located in an odd-numbered slot, and the second random access occasion set is located in an even-numbered slot;
a start moment of the 1^{st} random access occasion in the first random access occasion set is an odd-numbered orthogonal frequency division multiplexing symbol, and a start moment of the 1^{st} random access occasion in the second random access occasion set is an even-numbered orthogonal frequency division multiplexing symbol; or
an index of each random access occasion in the first random access occasion set is an odd number, and an index of each random access occasion in the second random access occasion set is an even number.

10. The method according to any one of claims 1 to 9, wherein the first time-frequency resource is a physical random access channel PRACH resource.

11. A communication method, comprising:
determining, by a second apparatus, first information, wherein the first information indicates a first time-frequency resource, the first time-frequency resource is used for random access, the first time-frequency resource comprises at least two time-frequency resource units, any two of the at least two time-frequency resource units do not overlap with each other in time domain, the first time-frequency resource corresponds to a first time domain resource and a first frequency domain resource, the first time domain resource is located in a first time domain unit, a first frequency domain unit corresponding to the first time domain unit comprises a first subband for uplink transmission and a second subband for downlink transmission, and the first frequency domain resource is located on the first subband; and
sending, by the second apparatus, the first information to a first apparatus.

12. The method according to claim 11, wherein the method further comprises:
sending, by the second apparatus, second information to the first apparatus, wherein the second information indicates a first threshold, the first threshold and a measurement value are used by the first apparatus to select one of the at least two time-frequency resource units as a time-frequency resource for random access, and the measurement value is obtained by the first apparatus through measurement.

13. The method according to claim 12, wherein
the first threshold is a reference signal received power threshold, and the measurement value is a received power of the reference signal;
the first threshold is a reference signal transmit power threshold, and the measurement value is a transmit power of the reference signal;
the first threshold is a reference signal path loss threshold, and the measurement value is a path loss of the reference signal; or
the first threshold is a distance threshold between the first apparatus and the second apparatus, and the measurement value is a distance between the first apparatus and the second apparatus.

14. The method according to claim 11, wherein the method further comprises:
sending, by the second apparatus, third information to the first apparatus, wherein the third information indicates a first association relationship, and the first association relationship is an association relationship between a state of the first apparatus and the at least two time-frequency resource units.

15. The method according to any one of claims 11 to 14, wherein the at least two time-frequency resource units comprise a first time-frequency resource unit and a second time-frequency resource unit, the first time domain resource occupies a first time period in time domain, the first time-frequency resource unit occupies a first sub-time period in time domain, and the second time-frequency resource unit occupies a second sub-time period in time domain.

16. The method according to claim 15, wherein the method further comprises:
receiving, by the second apparatus, a preamble from the first apparatus in the first time-frequency resource unit; and
sending, by the second apparatus, first scheduling information to a third apparatus that transmits a physical downlink shared channel PDSCH in the first sub-time period, wherein the first scheduling information comprises at least one piece of the following information:
a transmit power of the PDSCH, a downlink resource for transmitting the PDSCH, a beam for sending the PDSCH, a transmission repetition indication, a modulation and coding scheme MCS, or a precoding scheme, wherein
the transmit power of the PDSCH is greater than or equal to a second threshold, a distance between the downlink resource for transmitting the PDSCH and the first time-frequency resource unit is greater than or equal to a third threshold, the transmission repetition indication indicates that the PDSCH is capable of being repeatedly transmitted, and the MCS is less than or equal to a fourth threshold.

17. The method according to claim 15, wherein the method further comprises:
receiving, by the second apparatus, a preamble from the first apparatus in the second time-frequency resource unit; and
sending, by the second apparatus, second scheduling information to a fourth apparatus that transmits a physical downlink shared channel PDSCH in the second sub-time period, wherein the second scheduling information comprises at least one piece of the following information:
a transmit power of the PDSCH, a downlink resource for transmitting the PDSCH, a beam for sending the PDSCH, a transmission repetition indication, or a modulation and coding scheme MCS, wherein
the transmit power of the PDSCH is less than a second threshold, a distance between the downlink resource for transmitting the PDSCH and the first time-frequency resource unit is less than a third threshold, the transmission repetition indication indicates that the PDSCH is not capable of being repeatedly transmitted, and the MCS is greater than or equal to a fourth threshold.

18. The method according to any one of claims 15 to 17, wherein the method further comprises:
sending, by the second apparatus, a system message to the first apparatus, wherein the system message indicates a synchronization signal block SSB index, the SSB index is associated with a first random access occasion set and a second random access occasion set, the first random access occasion set belongs to the first time-frequency resource unit, and the second random access occasion set belongs to the second time-frequency resource unit.

19. The method according to claim 18, wherein
the first random access occasion set is indicated by a first mask index, and the second random access occasion set is indicated by a second mask index;
the first random access occasion set is located in an odd-numbered slot, and the second random access occasion set is located in an even-numbered slot;
a start moment of the 1^{st} random access occasion in the first random access occasion set is an odd-numbered orthogonal frequency division multiplexing symbol, and a start moment of the 1^{st} random access occasion in the second random access occasion set is an even-numbered orthogonal frequency division multiplexing symbol; or
an index of each random access occasion in the first random access occasion set is an odd number, and an index of each random access occasion in the second random access occasion set is an even number.

20. A communication method, comprising:
receiving fourth information, wherein the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit comprises a frequency domain resource for uplink transmission and a frequency domain resource for downlink transmission, the first frequency domain resource is located in the first frequency domain unit, and the first parameter comprises at least one of the following parameters:
a format of a first preamble, a first received power, or a first transmit power; and
receiving fifth information, wherein the fifth information indicates a second parameter corresponding to a second time-frequency resource, the second time-frequency resource corresponds to a second time domain resource and a second frequency domain resource, the second time domain resource is located in a second time domain unit, a frequency domain resource comprised in a second frequency domain unit corresponding to the second time domain unit is used for uplink transmission, the second frequency domain resource is located in the second frequency domain unit, and the second parameter comprises at least one of the following parameters:
a format of a second preamble, a second received power, or a second transmit power, wherein
the fourth information and the fifth information are carried by using different signaling, or the fourth information and the fifth information are carried by using different fields.

21. A communication method, comprising:
sending fourth information, wherein the fourth information indicates a first parameter corresponding to a first time-frequency resource, the first time-frequency resource corresponds to a first time domain resource and a first frequency domain resource, the first time domain resource is located in a first time domain unit, a first frequency domain unit corresponding to the first time domain unit comprises a frequency domain resource for uplink transmission and a frequency domain resource for downlink transmission, the first frequency domain resource is located in the first frequency domain unit, and the first parameter comprises at least one of the following parameters:
a format of a first preamble, a first received power, or a first transmit power; and
sending fifth information, wherein the fifth information indicates a second parameter corresponding to a second time-frequency resource, the second time-frequency resource corresponds to a second time domain resource and a second frequency domain resource, the second time domain resource is located in a second time domain unit, a frequency domain resource comprised in a second frequency domain unit corresponding to the second time domain unit is used for uplink transmission, the second frequency domain resource is located in the second frequency domain unit, and the second parameter comprises at least one of the following parameters:
a format of a second preamble, a second received power, or a second transmit power, wherein
the fourth information and the fifth information are carried by using different signaling, or the fourth information and the fifth information are carried by using different fields.

22. The method according to claim 20 or 21, wherein a length of the format of the first preamble is greater than a length of the format of the second preamble, the first received power is less than the second received power, and the first transmit power is greater than the second transmit power.

23. A communication apparatus, configured to implement the method according to any one of claims 1 to 10, 20, and 22.

24. The communication apparatus according to claim 23, wherein the communication apparatus comprises a terminal device or a chip.

25. A communication apparatus, configured to implement the method according to any one of claims 11 to 19, 21, and 22.

26. The communication apparatus according to claim 25, wherein the communication apparatus comprises a network device or a chip.

27. A computer-readable storage medium, wherein the computer-readable storage medium stores computer instructions, and when the computer instructions are executed, the method according to any one of claims 1 to 22 is implemented.

28. A computer program product, wherein when the computer program product is run, the method according to any one of claims 1 to 22 is implemented.
